(19) **Europäisches Patentamt / European Patent Office / Office européen des brevets**

(11) **EP 2 034 605 B1**

(12) **EUROPEAN PATENT SPECIFICATION**

(45) Date of publication and mention
of the grant of the patent:
**28.03.2012 Bulletin 2012/13**

(51) Int Cl.:
*H02P 21/00* (2006.01)   *H02P 6/18* (2006.01)
*H02M 7/48* (2007.01)   *H02M 7/527* (2006.01)

(21) Application number: **06797126.7**

(22) Date of filing: **31.08.2006**

(86) International application number:
**PCT/JP2006/317166**

(87) International publication number:
**WO 2008/026270 (06.03.2008 Gazette 2008/10)**

(54) **ELECTRIC MOTOR DRIVING DEVICE, AND COMPRESSOR DRIVING DEVICE**

ELEKTROMOTOR-ANTRIEBSEINRICHTUNG UND KOMPRESSOR-ANTRIEBSEINRICHTUNG

DISPOSITIF DE COMMANDE DE MOTEUR ÉLECTRIQUE, ET DISPOSITIF DE COMMANDE DE COMPRESSEUR

(84) Designated Contracting States:
**CH DE ES FR IT LI**

(43) Date of publication of application:
**11.03.2009 Bulletin 2009/11**

(73) Proprietor: **Mitsubishi Electric Corporation**
**Chiyoda-ku**
**Tokyo 100-8310 (JP)**

(72) Inventors:
• **SHINOMOTO, Yosuke**
**Chiyoda-ku**
**Tokyo 100-8310 (JP)**
• **ARISAWA, Koichi**
**Chiyoda-ku**
**Tokyo 100-8310 (JP)**

• **SAKANOBE, Kazunori**
**Chiyoda-ku**
**Tokyo 100-8310 (JP)**

(74) Representative: **Pfenning, Meinig & Partner GbR**
**Patent- und Rechtsanwälte**
**Theresienhöhe 13**
**80339 München (DE)**

(56) References cited:
| | |
|---|---|
| EP-A1- 1 630 949 | JP-A- 09 074 800 |
| JP-A- 09 215 397 | JP-A- 63 095 880 |
| JP-A- 2004 064 958 | JP-A- 2005 020 838 |
| JP-A- 2005 027 386 | JP-A- 2006 203 963 |
| JP-B2- 3 526 876 | US-A- 5 734 251 |
| US-A1- 2002 113 569 | US-A1- 2004 232 877 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a motor driver for driving a motor, and a compressor drive having the motor driver installed therein.

Background Art

Known from the prior art (JP 2004-064958) is an inverter-based control method for a motor driver which restricts an output voltage command value and reduces pulsation of the inverter output voltage. A voltage control amount limiting part restricts a voltage control amount. An output voltage amending part which amends the output signal from the limiting part based on a DC voltage primary detecting element is provided.

Also known in the prior art (JP 2006-303963) is an inverter control for a motor. Therein, a rectification circuit part is shown. A capacitor of small capacity is used between the DC buses of the inverter.

These two aforementioned prior art documents have no integrator in the current control unit. When voltage command > actual voltage, restrictions and corrections are simply performed.

Also known from the prior art (US 5,734,251) is a variable speed control for an AC motor. Although there is an integrating calculator, it is not a current control unit because the integrating calculator integrates the output (velocity) from the slip frequency calculator to convert it into a position.

A generally employed motor driver allows the inverter to supply power to the motor by rectifying the AC source, and smoothing the DC power after rectification by the smoothing capacitor. The aforementioned structure inevitably requires the use of the smoothing capacitor, which increases the size and cost of the structure. Elimination of the smoothing capacitor, however, may cause pulsation in the DC voltage after rectification in synchronization with the AC source, thus adversely influencing the motor such as the torque pulsation or the deteriorated efficiency.

The technique for putting the phase of the motor forward has been introduced for the purpose of suppressing the adverse influence on the motor owing to the DC voltage pulsation caused by elimination of the smoothing capacitor (for example, see Patent Document 1).

The technique has been introduced for controlling the motor torque in advance with the frequency double the power source (for example, see Patent Document 2).

In the case of the three-phase AC source, the DC voltage pulsation is smaller than that of the single-phase AC source. So the technique for compensating the pulsation of the DC voltage by momentarily detecting the DC voltage has been introduced (for example, see Patent Document 3).

In the case where the motor is driven under the DC voltage pulsation condition, the voltage output from the inverter is limited to cope with the voltage insufficiency caused by the lowered DC voltage (for example, see Patent Document 4).

The motor may be driven by adjusting the command value of the current control in accordance with reduction in the DC voltage under the aforementioned pulsation condition of the DC voltage (for example, see Patent Documents 5 to 7).

The technique provided with the clamping circuit has been proposed for protecting the motor from voltage rise due to the reverse power flow to the inverter caused by the regenerative power energy from the motor at the pulsating DC voltage (for example, see Patent Document 8).

The method for driving the motor while detecting the rotor position of the permanent magnet motor without using the position sensor has been disclosed (for example, see Non-Patent Documents 1 and 2).

[Patent Document 1] Japanese Unexamined Patent Application Publication No. 10-150795 (pp. 5-7, FIG. 1)
[Patent Document 2] Japanese Unexamined Patent Application Publication No. 2002-51589
[Patent Document 3] Japanese Unexamined Patent Application Publication No. 6-153534 (FIG. 2)
[Patent Document 4] Japanese Unexamined Patent Application Publication No.2005-20986 (FIG. 3)
[Patent Document 5] Japanese Unexamined Patent Application Publication No.2002-223599
[Patent Document 6] Japanese Unexamined Patent Application Publication No. 2003-164179
[Patent Document 7] Japanese Unexamined Patent Application Publication No. 2005-130666
[Patent Document 8] Japanese Unexamined Patent Application Publication No. 2005-39902
[Non-Patent Document 1] Watanabe, et al.,: Method for sensor-less detection of a rotor position and speed of permanent magnet field motor, Journal of IEEJ, D, Vol. 110, No. 11, pp. 1193-1200 (1990)
[Non-Patent Document 2] Takeshita, et al.,: Sensor-less salient-pole type brushless DC motor control based on speed electromotive force, Journal of IEEJ, D, Vol. 117, No. 1, pp. 98-104 (1997)

Summary of the Invention

In a generally employed motor driver and a compressor drive, the capacitor with small capacitance for smoothing the DC voltage after rectification of AC source is provided, or no such capacitor is provided for realizing the structure of small size, light weight and low cost while reducing the DC voltage pulsation accompanied with decrease in the capacitance of the capacitor. Alternatively, the high efficiency structure for suppressing the harmonic content of the input current has been proposed.

The aforementioned motor driver is required to narrow the operation range to the variable speed range which allows decrease in the harmonic current of the input current while driving the motor.
When applying the motor driver to the system with the wide variable speed range, for example, an air conditioning system, the aforementioned limitation is required.

In view of the aforementioned problems, the present invention provides a motor driver which employs a capacitor with small capacitance for smoothing the DC voltage after rectification of the AC source or no such capacitor so as to be of small size, light weight, and low cost, and capable of effectively reducing the harmonic current of the input current.
The present invention further provides a compressor drive having the motor driver installed therein.

A motor driver according to the present invention comprises:

a rectifying unit for rectifying an AC voltage from an AC source to a DC voltage; a power conversion unit for converting the DC voltage output from the rectifying unit into the AC voltage so as to be applied to a motor; and a control unit for controlling the voltage applied to the motor from the power conversion unit, wherein: the control unit includes an output voltage limit unit which executes a control such that a scalar value of the voltage applied to the motor becomes equal to or lower than a maximum output voltage defined by the DC voltage output from the rectifying unit; an amount of a voltage limited by the output voltage limit unit is fed back to the control unit; the control unit includes a current control unit which receives a command value of a current applied to the motor, and outputs a command value of a voltage applied to the motor based on the command value of the current; and the output voltage limit unit receives the command value of the voltage from the current control unit, calculates the scalar value of the command value of the voltage, and limits the voltage applied to the motor when the scalar value exceeds the maximum output voltage defined by the DC voltage output from the rectifying unit; characterized in that the current control unit includes an integrator, and calculates the command value of the voltage by allowing the integrator to perform a control calculation including an integral control so as to be output; the output voltage limit unit feeds back the voltage limit amount to the current control unit; and the current control unit subtracts the voltage limit amount fed back by the output voltage limit unit from an output value of the integrator.

A motor driver according to the present invention comprises:

a rectifying unit for rectifying an AC voltage from an AC source to a DC voltage; a power conversion unit for converting the DC voltage output from the rectifying unit into the AC voltage so as to be applied to a motor; and a control unit for controlling the voltage applied to the
motor from the power conversion unit, wherein: the control unit includes an output voltage limit unit which executes a control such that a scalar value of the voltage applied to the motor becomes equal to or lower than a maximum output voltage defined by the DC voltage output from the rectifying unit; an amount of a voltage limited by the output voltage limit unit is fed back to the control unit; the control unit calculates the command value of the current so as to keep a total magnetic flux amount of the motor constant; the control unit includes a current command generation unit which receives a command value of a magnetic flux of the motor to calculate the command value of the current so as to keep the total magnetic flux amount of the motor constant; and the current command generation unit calculates a voltage drop amount caused by a phase resistance based on the phase resistance and the phase current of the motor, and calculates the total magnetic flux amount based on a difference between the voltage applied to the motor and the voltage drop amount; characterized in that a predetermined offset is provided for a phase corresponding to a zero-crossing point of the AC source when the current command generation unit calculates the command value of the current, and the current command generation unit decreases an amplitude of the command value of the current by a predetermined rate so as to be offset with a predetermined value for calculating the command value of the current, and calculates to correct the command value of the current so as to become the same as the command value prior to the offset in a phase corresponding to a peak point of the AC source.

The motor driver according to the present invention is structured to employ the small capacitance smoothing capacitor or no such smoothing capacitor so as to realize the motor driver of small size, light weight and low cost.
As the voltage limit amount resulting from limitation of the output voltage is fed back to momentarily eliminate the influence of the output voltage error caused by the voltage limitation, thus effectively reducing the harmonic content of the input current.

Brief Description of the Drawings

[Fig. 1] Fig. 1 is a circuit block diagram of a motor driver according to the first embodiment.
[Fig. 2] Fig. 2 shows a waveform of the DC voltage smoothed by a smoothing capacitor 4.
[Fig. 3] Fig. 3 is a graph showing a voltage limitation performed by an output voltage limit unit 23.
[Fig. 4] Fig. 4 is a view showing a structure of the output voltage limit unit 23.
[Fig. 5] Fig. 5 shows a structure of a current control unit 22.
[Fig. 6] Fig. 6 shows a structure having an inverter main circuit portion 6 shown in Fig. 1 equivalently replaced by a virtual current source 30.
[Fig. 7] Fig. 7 is a circuit block diagram of a motor driver according to the second embodiment.
[Fig. 8] Fig. 8 shows a structure of a current command generation unit 26.
[Fig. 9] Fig. 9 shows pulsation of the total magnetic flux of a motor 5.
[Fig. 10] Fig. 10 is a graph showing a magnetic flux command which changes in accordance with a rotating speed of the motor 5.
[Fig. 11] Fig. 11 shows the DC voltage waveform and the input current waveform obtained when the motor 5 is regenerated.
[Fig. 12] Fig. 12 is a view as an example showing an offset provided for the r-axis current command value Ir*.
[Fig. 13] Fig. 13 shows a waveform of an actual power source phase and a waveform of a calculation phase generated through a sampling based on detection values of a power source phase detector 9.
[Fig. 14] Fig. 14 is a circuit block diagram of a motor driver according to the third embodiment.
[Fig. 15] Fig. 15 shows a waveform indicating the timing for switching an operation in an open loop to a closed loop.
[Fig. 16] Fig. 16 is a vector view for comparing the voltage observed from the control axis on the open loop with the voltage observed from the control axis on the closed loop.
[Fig. 17] Fig. 17 shows r-axis and δ-axis current command values upon switching of the control from the open loop to the closed loop.
[Fig. 18] Fig. 18 shows an example of an actual waveform of a phase current (U-phase) of the motor 5.

Reference Numerals

| | |
|---|---|
| 1 | single-phase AC source |
| 2 | coil |
| 3 | rectifying unit |
| 4 | smoothing capacitor |
| 5 | motor |
| 6 | inverter main circuit portion |
| 7a, 7b | phase current detector |
| 8 | DC voltage detector |
| 9 | power source phase detector |
| 10 | control unit |
| 21 | coordinate conversion unit |
| 22 | current control unit |
| 23 | output voltage control unit |
| 24a, 24b | integrator |
| 25 | current command value |
| 26 | current command generation unit |
| 27 | position estimation unit |

Best Mode for Carrying Out the Invention

First Embodiment

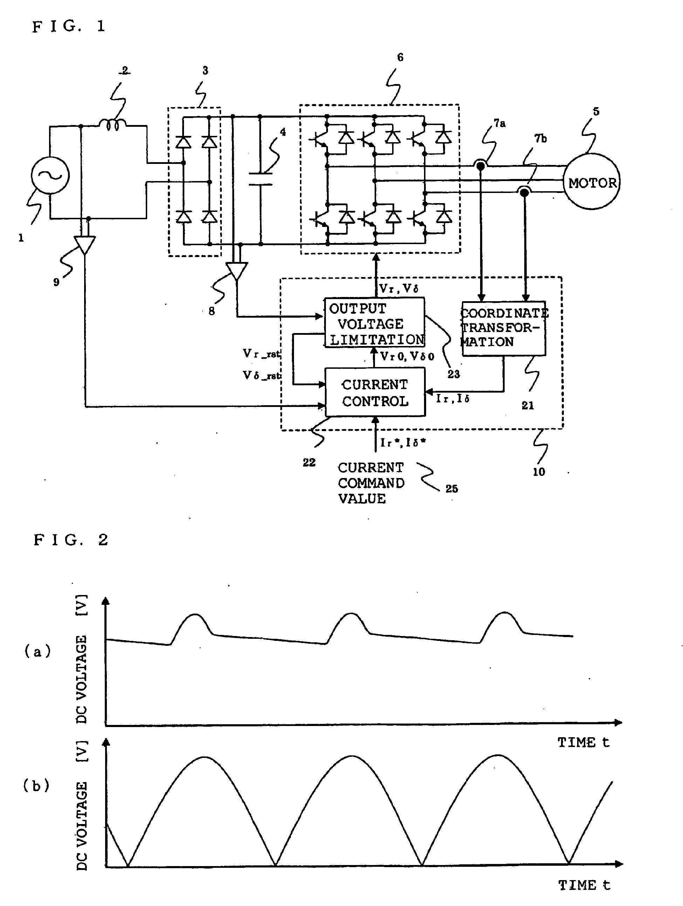

Fig. 1 is a circuit block diagram of a motor driver according to a first embodiment of the present invention.

Fig. 1 shows a single-phase AC source 1, a coil 2, a rectifying unit 3, a smoothing capacitor 4, a motor 5, an inverter main circuit portion 6, phase current detectors 7a and 7b, a DC voltage detector 8, a power source phase detector 9, and a control unit 10.

The coil 2 is connected between the single-phase AC source 1 and the rectifying unit 3.

The rectifying unit 3 rectifies the AC voltage from the single-phase AC source 1 into the DC voltage.

The smoothing capacitor 4 is connected to an output side of the rectifying unit 3 for smoothing the voltage which has been rectified by the rectifying unit 3.

The motor 5 is connected to an output side of the inverter main circuit portion 6 so as to be driven by the motor driver according to the first embodiment.

The inverter main circuit portion 6 converts the DC voltage smoothed by the smoothing capacitor 4 into the AC voltage so as to be applied to the motor 5 to be driven.

The phase current detectors 7a and 7b detect the phase current of the motor 5, and outputs the detected phase current to the control unit 10.

The DC voltage detector 8 detects the DC voltage output from the rectifying-unit 3, and outputs the detected DC voltage to the control unit 10.

The power source phase detector 9 detects the power source phase of the single-phase AC source 1, and outputs the detected power source phase to the control unit 10.

The control unit 10 receives a current command value 25 (Ir*, 1δ*) to be applied to the motor 5, and controls the inverter main circuit portion 6 based on the current command value 25 so as to control the voltage applied to the motor 5.

The control unit 10 includes a coordinate conversion unit 21, a current control unit 22, and an output voltage control unit 23.

The coordinate conversion unit 21 receives the detected value of the phase current of the motor 5 from the phase current detectors 7a and 7b, and outputs the value (Ir, 1δ) obtained through coordinate transformation into the orthogonal biaxial coordinate system.

The current control unit 22 receives the current command value 25, outputs of the coordinate conversion unit 21 and the power-source phase detector 9, and the voltage limit amount (Vr_rst, Vδ_rst) to be described later, and outputs the voltage command value (Vr0, Vδ0) to be applied to the motor 5.

The output voltage limit unit 23 receives outputs of the DC voltage detector 8 and the current control unit 22, and outputs a command of voltages (Vr, Vδ) to be applied to the motor 5 to the inverter main circuit unit 6. The voltage limit amount (Vr_rst, Vδ_rst) is output to the current control unit 22 under the predetermined conditions.

Further details of the aforementioned structures and suffixes (r,δ) will be described later.

Fig. 2 shows a waveform of the DC voltage which has been smoothed by the smoothing capacitor 4.

Fig. 2(a) shows the DC voltage waveform when the capacitance of the smoothing capacitor 4 is sufficiently large. In this case, as the DC voltage hardly fluctuates, or fluctuates by a small amount as shown by the drawing, the output torque of the motor 5 may be controlled to substantially a constant value.

Fig. 2(b) shows the DC voltage waveform when the capacitance of the smoothing capacitor is small, and the DC. voltage is pulsating. As shown in the drawing, the DC voltage largely pulsates resulting from the small capacitance of the smoothing capacitor 4, having the similar waveform as that of the source voltage. When the motor 5 is controlled in the same manner as in the case of the DC voltage shown in FIG. 2(a), the sufficient torque cannot be output at a time when the DC voltage largely drops (around zero-crossing of the single-phase AC source 1). This may make the control unstable.

In the present invention, the capacitance of the smoothing capacitor 4 is reduced to the degree such that the DC voltage largely pulsates at the frequency double the one of the single-phase AC source 1 as shown in Fig. 2(b) so as to realize the structure of small size, light weight, and low cost. The problem with respect to the control of the single-phase AC source 1 around the zero-crossing will be described later.

The theoretical background of the increase in the allowable pulsation range of the DC voltage for reducing the capacitance of the smoothing capacitor 4 will be described prior to the explanation of the structure shown in Fig. 1.

(1) Assuming that the inductance of the motor 5 is set to L, the rated current is set to I, and the allowable pulsating range of the DC voltage is set to V, the following equation (2) is established based on energy conservation law.

$$(1/2)CV^2 = (1/2)LI^2 \quad \dots \quad (2)$$

(2) Assuming that L=10mH and I=10A, the relationship of C=2500uF is established according to the equation (2) when the pulsating range V is 20V. Meanwhile, when the pulsating range V is 280V, the relationship of C=13uF is established according to the equation (2).

(3) In other words, the capacitance of the capacitor may be largely reduced by extending the pulsating range of the DC voltage as shown in Fig. 2(b). The theoretical calculation clearly justifies the reduction in the capacitance of the capacitor.

Actually, the smoothing capacitor 4 is charged with the charge supplied from the single-phase AC source 1. The aforementioned calculation using the equation (2), thus, represents a mere outline calculation rather than the one for perfectly expressing the physical phenomena.

The structure shown in Fig. 1 will be described in detail hereinafter.

The coordinate conversion unit 21 converts the phase current of the motor 5 detected by the phase current detectors 7a and 7b into the current in the orthogonal biaxial coordinate system. The converted orthogonal biaxial coordinates will be referred to as r-axis and δ-axis, and the same codes are used as suffixes for the voltage and current, respectively.

In the first embodiment, the respective current and voltage values are controlled using the values on the r-axis and δ-axis including the current command value 25(Ir*, Iδ*), which will be applied to the explanations in the subsequent examples.

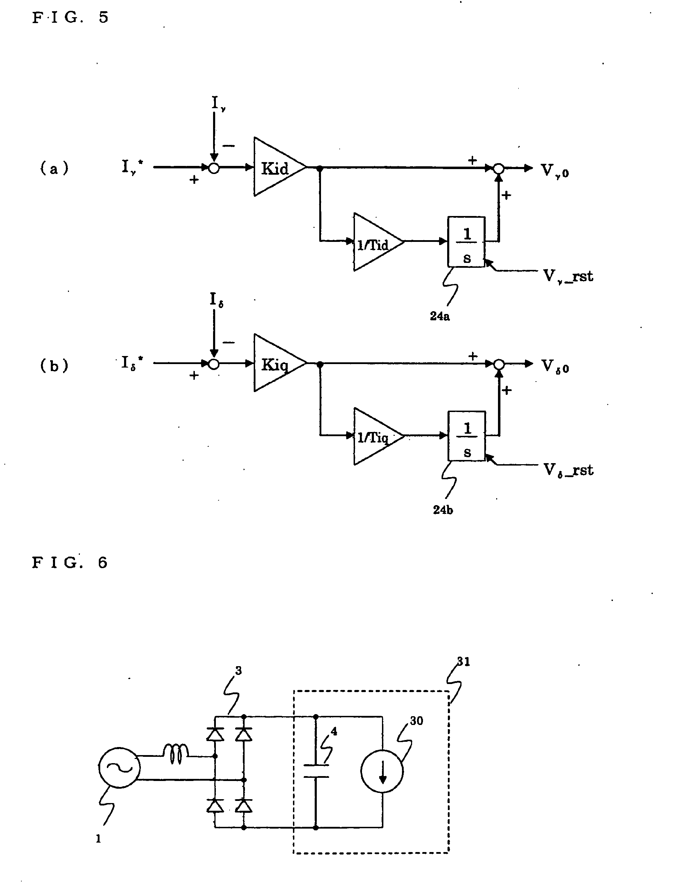

The r-axis and δ-axis current values (Ir, Iδ) which have been coordinate transformed by the coordinate conversion unit 21 are output to the current control unit 22. The structure and operation of the current control unit 22 will be described later referring to Fig. 5.

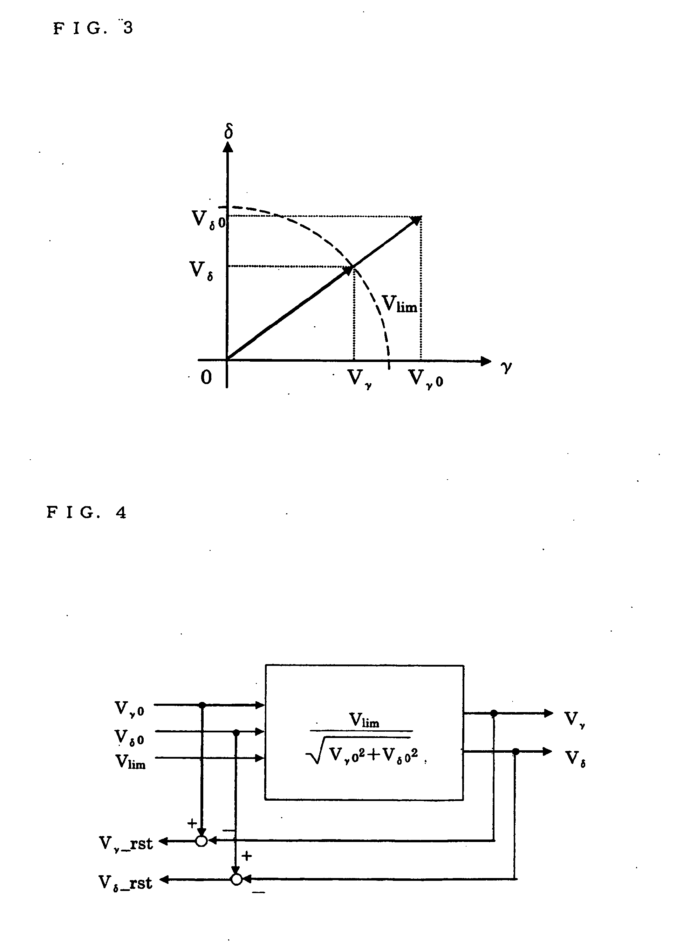

Fig. 3 is a view for explaining the voltage limitation performed by the output voltage limit unit 23.

The inverter main circuit portion 6 is not allowed to output the voltage equal to or higher than the maximum output voltage defined by the input DC voltage. It is assumed that the maximum value of the output voltage is set to Vlim (shown by a dotted circular arc shown in Fig. 3).

When the command value (Vr0, Vδ0) of the voltage applied to the motor 5 exceeds the Vlim, the output voltage limit unit 23 corrects the voltage command value (Vr0, Vδ0) such that the scalar value becomes equal to or smaller than the value Vlim. Then the inverter main circuit portion 6 has to be controlled based on the corrected voltage value (Vr, Vδ).

The output voltage limit unit 23 serves to limit the voltage applied to the motor 5 to be equal to or smaller than the maximum value Vlim.

Fig. 4 shows the structure of the output voltage limit unit 23.

(1) Input

The output voltage limit unit 23 receives an input of the Vlim value defined by the output of the DC voltage detector 8 together with the command value (Vr0, Vδ0) of the voltage applied to the motor 5.

(2) Voltage limitation

Then the output voltage limit unit 23 compares the value of Vlim with the scalar value of the voltage command value (Vrδ, Vδ0).

(3) Output

When the scalar value exceeds the value of Vlim, the voltage command value (Vr0, Vδ0) is corrected so as to output the corrected voltage value (Vr, Vδ) as the final voltage.

When the scalar value does not exceed the value of Vlim, the voltage command value (Vr0, Vδ0) is output as the value (Vr, Vδ).

When the voltage is corrected, each difference value between the command values before and after the correction, that is, (Vr0-Vr, Vδ0-Vδ) = voltage limit amount (Vr_rst, Vδ_rst) is output to the current control unit 22.

Fig. 5 shows a structure of the current control unit 22.

Fig. 5(a) denotes the r-axis current control, and Fig. 5(b) denotes the δ-axis current control. As the aforementioned structures are the same, the r-axis current control will only be described.

(1) Basic structure

The current control unit 22 receives the command value Ir* of the r-axis current, and the coordinate transformed r-axis current value Ir output from the coordinate conversion unit 21 so as to obtain the difference therebetween (Ir* - Ir).

Then the proportional-integral control calculation is performed using the following equation (3) based on the obtained difference for calculating the operation amount.

$$\text{Operation amount} = Kid \times \{\text{difference} + (1/Tid) \times$$

$$\int (\text{difference})dt\}\dots (3)$$

where Kid denotes the proportional gain, and Tid denotes the integral gain.

The integral calculation of the above equation (3) is performed by an integrator 24a (the integrator 24b on the δ-axis). The obtained operation amount is output to the output voltage limit unit 23 as the r-axis voltage command value Vr0.

(2) Calculated correction using feedback from the output voltage limit unit 23

The basic structure of the current control unit 22 has been described above. In the present invention, the calculated correction is performed to reflect the feedback from the output voltage limit unit 23 on the integral value of the integrator 24a.

When the voltage limitation as described referring to Figs. 3 and 4 has been performed by the output voltage limit unit 23, the resultant voltage limit amount Vr_rst is fed back to the current control unit 22.

The current control unit 22 performs the correction by subtracting the voltage limit amount Vr_rst from the integral value of the integrator 24a. The same may be applied to the correction with respect to the δ-axis (integrator 24b). The background of the aforementioned calculation will be described hereinafter.

In the present invention, the capacitance of the smoothing capacitor 4 is reduced to allow the DC voltage to largely pulsate at the frequency double the one of the single-phase AC source 1. At every half cycle of the single-phase AC source 1, the DC voltage input to the inverter main circuit portion 6 largely drops to cause the output voltage limit unit 23 to limit the voltage.

In the aforementioned case where the integrator is employed in the current control unit 22, the error by the amount corresponding to the limited voltage resides in the integration. As a result, the integral value contains the influence of the error, which deforms the waveform to increase the harmonic content.

The integral calculation may be stopped upon the voltage limitation for the purpose of eliminating the influence of the integral error (for example, see Patent Document 4). The resultant error may reside in the integration when resuming the integral control, thus failing to sufficiently reduce the harmonic content of the input current. Especially when the voltage value of the single-phase AC source 1 is high, the change in the momentary time for the voltage pulsation becomes large. The aforementioned tendency is frequently observed.

In the present invention, the aforementioned problem may be solved by correcting the error which resides in the integration through subtraction without stopping the integral calculation.

When the output voltage limit unit 23 performs the voltage limitation, the resultant voltage limit amount Vr_rst is subtracted from the integrator 24a (integrator 25b) to momentarily eliminate the integral error owing to the output voltage error.

This makes it possible to effectively reduce the harmonic content of the input current to be lower compared with the method for stopping the integral calculation of the integrator 24a (and integrator 25b).

The process for reducing the harmonic content of the input current by controlling the waveform of the current flowing to the inverter main circuit portion 6 to be similar to that of the voltage of the single-phase AC source 1 will be discussed.

Firstly, the theoretical background of the process will be discussed referring to Fig. 6, and then the specific method for realizing the process according to the first embodiment will be described.

Fig. 6 is a view of the structure shown in Fig. 1 having the inverter main circuit portion 6 equivalently replaced by a virtual current source 30. The virtual current source 30 and the smoothing capacitor 4 constitute a parallel circuit 31. As the smoothing capacitor 4 has the smaller capacitance, the parallel circuit 31 may be operated in substantially the same manner for operating the pure resistance under the condition where the output current of the virtual current source 30 is in synchronization with the voltage of the single-phase AC source 1.

Generally in the pure resistance circuit, no displacement of the waveform occurs between the voltage and the current, that is, both waveforms are in the same phase. Under the aforementioned condition, the input current has the waveform which is similar to that of the voltage of the single-phase AC source 1 in the same phase.

The waveform similar to that of the voltage of the single-phase AC source 1 in the same phase has no harmonic content such as distortion. The harmonic content of the input current may be reduced by making the waveform of the input current similar to that of the voltage of the single-phase AC source 1 in the same phase.

In order to realize the aforementioned structure, the motor 5 may be controlled such that the waveform of the current flowing to the inverter main circuit portion 6 becomes similar to that of the voltage of the single-phase AC source 1 by defecting, for example, the power source voltage information, the phase information of the power source, the zero point of the power source voltage, the momentary value of the source voltage, or the momentary pulsating voltage of the DC voltage.

That is, the current flowing to the inverter main circuit portion 6 is detected such that the detected current has the waveform similar to that of the power source voltage.

In the present invention, the current input to the inverter main circuit 6 accords with the output current based on Kirchhoff's law. As both waveforms of the r-axis and d-axis currents are made similar to that of the voltage of the single-phase AC source 1, the current equivalently flowing to the inverter main circuit portion 6 becomes similar to that of the voltage of the single-phase AC source 1.

The structure allows the phase current detectors 7a and 7b of the motor 5 to serve as an input current detector, requiring no input current detector to be disposed at the side of the single-phase AC source 1, thus forming the motor driver at low costs by reducing the number of the parts.

The specific structure for controlling both the r-axis and $\delta$-axis currents of the motor 5 to have waveforms similar to that of the voltage of the single-phase AC source 1 will be described.

Based on the power source phase of the single-phase AC power source 1 detected by the power source phase detector 9, the control unit 10 generates the sinusoidal waveform similar to that of the voltage of the single-phase AC source 1.

Then the thus generated sinusoidal waveform is multiplied by the current command value 25 (Ir*, I$\delta$*), which will be sent to the current control unit 22.

As a result, the current command value 25 (Ir*, I$\delta$*) pulsates in synchronization with the voltage of the single-phase AC source 1 such that the current flowing to the motor 5 pulsates in synchronization with the voltage of the single-phase AC source 1. In other words, both r-axis and $\delta$-axis currents of the motor 5 may be controlled to have the similar waveform to that of the voltage of the single-phase AC source 1. As a result, the aforementioned control may be realized.

The art for pulsating only the $\delta$-axis current to control the r-axis current to be kept substantially constant has been disclosed. For example, in Patent Document 5, the q-axis current is only pulsated to keep the d-axis current substantially constant.

The aforementioned structure improves the power factor of the power source compared with the present invention which pulsates both the r-axis and $\delta$-axis currents. However, the 30th or higher harmonic current content (that is, frequency content 30 times higher than that of the power source) increases.

The aforementioned harmonic may be limited by the regulation, for example, relevant law. So the present invention is superior to the related art in view of the conformity to the regulation. The present invention is capable of preventing the 30th or higher harmonic current from exceeding the regulated value while considering the piece-to-piece variations.

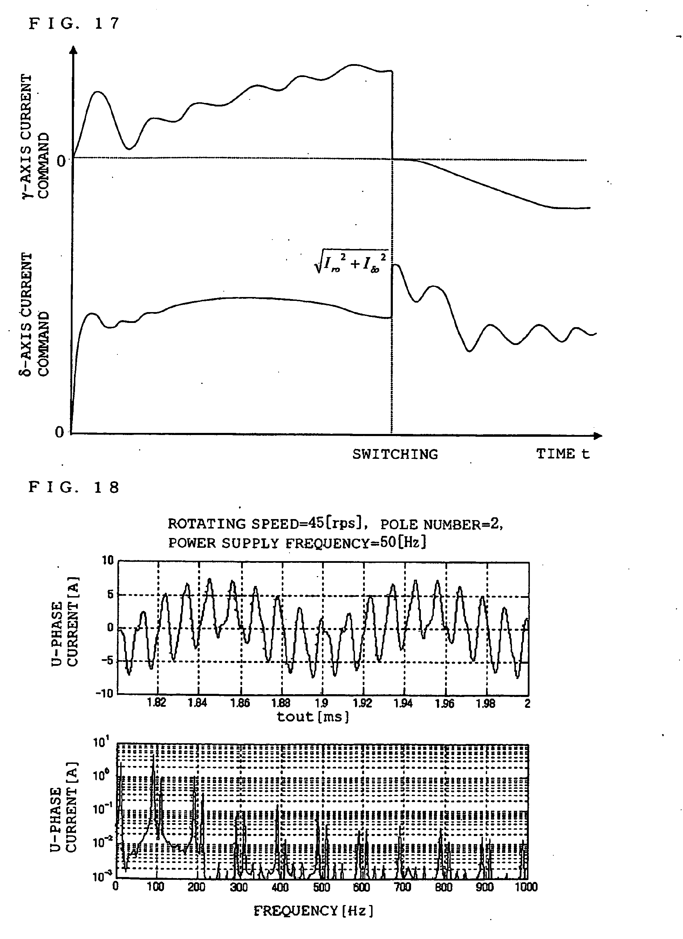

Fig. 18 shows an example of the actual waveform of the phase current (U-phase) of the motor 5.

Fig. 18 shows the example of the waveform when the frequency of the single-phase AC source 1 is set to 50 Hz, and the rotating speed of the 4-electrode motor 5 is set to 45 rps.

The current applied to the motor 5 has the frequency content thereof set as the basic frequency. Meanwhile, the frequency of the single-phase AC source 1 is also contained in the current flowing to the motor 5 because of the control for synchronization with the single-phase AC source 1.

As shown in Fig. 18, a beat phenomenon occurs in the phase current of the motor 5 as the frequency difference between the rotating speed of the motor 5 and the single-phase AC source 1.

In the example shown in Fig. 18, the rectified frequency is 100 Hz, and the inverter frequency is 90 Hz. The difference between those frequencies is 10 Hz.

As described above, the jump method is generally employed with respect to the rotating speed which beats on the power source. In the present invention, as the capacitor is eliminated, or the capacitor having the capacitance considerably reduced, the frequency at which the beat occurs will jump as the rotating speed of the motor 5.

In the first embodiment, the capacitance of then smoothing capacitor 4 is reduced to be small to allow the DC voltage to largely pulsate at the frequency double the one of the single-phase AC source 1.

In the aforementioned case, for example, in Patent Document 2, the capacitor with small capacitance approximately one hundredth of the general capacitance is employed. The capacitance of the smoothing capacitor 4 in the present invention is not limited to that of the generally employed capacitor, and the value one hundredth thereof.

In the first embodiment, the current control unit 22 performs the proportional-integral control as shown in Fig. 5. However, the process is not limited to the one as described above so long as the control calculation including the integral control is performed.

In the first embodiment, when the, output voltage limit unit 23 functions in limiting the voltage, the voltage limit amount is fed back as the output voltage error. However, the output voltage error is not limited to the one as described above.

The considerably low voltage so called saturated voltage may be generated in the semiconductor switching element used for the inverter main circuit portion 6 upon current application. Furthermore, the time for avoiding short-circuit is set for preventing damage to the element due to application of the short-circuit current to the switching element.

The output voltage error may be generated by the aforementioned saturated voltage or the time set for avoiding the short-circuit. The influence of the aforementioned causes is preliminarily stored in the memory and the like inside the control unit 10 such that the subtraction correction is performed based on the stored value.

The saturated voltage may be stored as the table corresponding to the current flowing to the motor 5. The time set for avoiding the short-circuit may be stored as the value corresponding to the pulsating DC voltage.

In the first embodiment, the capacitance of the smoothing capacitor 4 is reduced. It is also preferable to employ the coil 2 with low inductance. Preferably, the resonance frequency value of the smoothing capacitor 4 and the coil 2 is 40 to 50 times higher than the frequency of the single-phase AC source 1.

The structure which is not provided with the smoothing capacitor 4 is capable of providing the same effects as those of the first embodiment.

According to the first embodiment, the control unit 10 includes an output voltage limit unit 23 which executes a control such that a scalar value of the voltage applied to the motor 5 becomes equal to or lower than a maximum output voltage defined by the DC voltage output from the rectifying unit 3. An amount of a voltage (Vr_rst, Vδ_rst) limited by the output voltage limit unit 23 is fed back to the control unit 10.

In the structure where the capacitance of the smoothing capacitor 4 is reduced to largely pulsate the DC voltage, the voltage of the inverter main circuit portion 6 may be appropriately controlled, and such control state is fed back for avoiding the abrupt change in the value of the control calculation, and distortion of the input current waveform, thus suppressing increase in the harmonic content.

According to the first embodiment, the control unit 10 includes a current control unit 22 which receives a command value 25 of a current applied to the motor 5, and outputs a command value (Vr0, Vδ0) of a voltage applied to the motor 5 based on the command value 25 of the current. The output voltage limit unit 23 receives the command value (Vr0 Vδ0) of the voltage from the current control unit 22, calculates the scalar value of the command value (Vr0 Vδ0) of the voltage, and limits the voltage applied to the motor 5 when the scalar value exceeds the maximum output voltage defined by the DC voltage output from the rectifying unit 3.

In the structure where the capacitance of the smoothing capacitor 4 is reduced to largely pulsate the DC voltage, the current command value 25 may be reflected on the control of the voltage applied to the motor 5, and the appropriate voltage control in accordance with the pulsation of the DC voltage may be realized.

Phase current detectors 7a, 7b for detecting a phase current flowing to the motor 5 are provided. The current control unit 22 outputs the command value (Vr0 Vδ0) of the voltage applied to the motor 5 based on the command value 25 of the current and outputs of the phase current detectors 7a, 7b.

The phase current flowing to the motor 5 is compared with the current command value 25 such that the control calculation is performed to make those values close with each other.

The current control unit 22 includes integrators 24a, 24b, and calculates the command value (Vr0, Vδ0) of the voltage by allowing the integrators 24a, 24b to perform a control calculation including an integral control so as to be output. The output voltage limit unit 23 feeds back the voltage limit amount (Vr_rst, Vδ_rst) to the current control unit 22. The current control unit 22 subtracts the voltage limit amount (Vr_rst, Vδ_rst) fed back by the output voltage limit unit 23 from output values of the integrators 24a, 24b.

The difference between the command values of the voltage (Vr0, Vδ0) and the actual output voltage (Vr, Vδ) may be eliminated from the integral calculation to avoid the waveform distortion after the calculation. This makes it possible to avoid the distortion of the input current waveform, thus effectively reducing the harmonic content.

The output voltage limit unit 23 performs the limitation of the output voltage only when the scalar value of the command value (Vr0, Vδ0) of the voltage exceeds the maximum output voltage defined by the DC voltage output from the rectifying unit 3, and feeds back the voltage limit amount (Vr_rst, Vδ-rst) to the current control unit 22. The current control unit 22 performs the subtraction only when receiving the feedback of the voltage limit amount (Vr_rst, Vδ_rst) from the output voltage limit unit 23.

This makes it possible to eliminate the error of the integral calculation appropriately. As the subtraction correction does not have to be performed when it is not required, the structure is advantageous in view of the calculation efficiency.

The current control unit 22 outputs the command value (Vrδ, Vδ0) of the voltage such that waveform of the current flowing to the motor 5 becomes similar to that of the AC voltage from the single-phase AC source 1.

The input current and the voltage of the single-phase AC source 1 have similar waveforms in the same phase, thus reducing the harmonic content of the input current.

A power source phase detector 9 for detecting a phase of the single-phase AC source 1 is provided. The control unit 10 generates a sinusoidal waveform which is similar to that of the AC voltage from the single-phase AC source 1 based on the phase of the single-phase AC source 1 detected by the power source phase detector 9. The command value 25 of the current is multiplied by the sinusoidal waveform so as to be output to the current control unit 22.

An input current detector may be replaced by the phase current detectors 7a and 7b of the motor 5. As an input current detector does not have to be disposed at the side of the single-phase AC source 1, the motor driver may be produced at low cost by reducing the number of components.

The control unit 10 includes a coordinate conversion unit 21 for transforming a phase current of the motor 5

detected by the phase current detectors 7a, 7b into an orthogonal biaxial coordinate system. The coordinate conversion unit 21 outputs a coordinate transformed current value (Ir, Iδ) to the current control unit 22. The current control unit 22 outputs the command values (Vr0, Vδ0) of the voltage for the coordinate transformed biaxial coordinate based on the command value 25 of the coordinate transformed current and an output of the coordinate conversion unit 21.

The structure is capable of preventing the 30th or higher harmonic current from exceeding the regulated value while considering the piece-to-piece variation. It is, thus preferable in view of conformity to the regulation against the harmonic current.

The coil 2 is provided between the smoothing capacitor 4 and the single-phase AC source 1 such that the resonance frequency of the smoothing capacitor 4 and the coil 2 becomes 41 times higher than the frequency of the single-phase AC source 1.

This may make the coil 2 compact by itself, contributing to the compact structure of the motor driver.

Second Embodiment

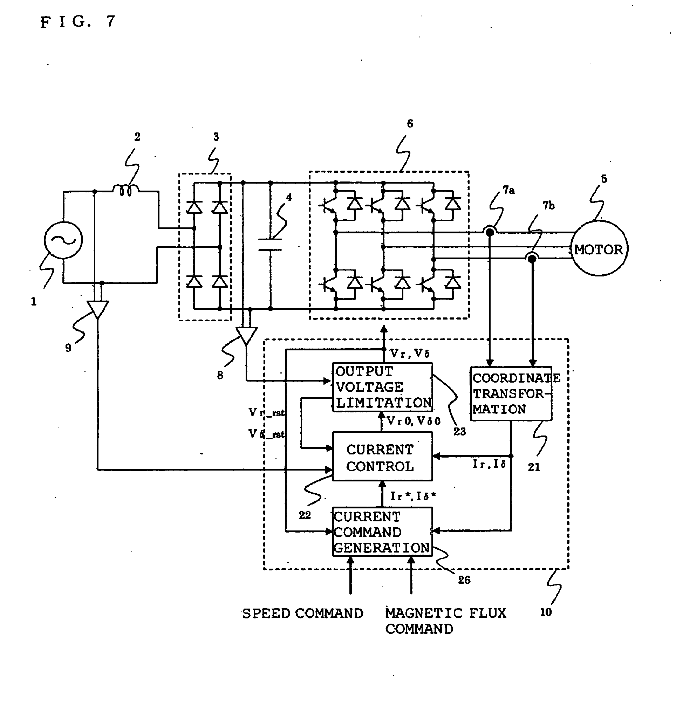

Fig. 7 is a circuit block diagram of a motor driver according to the second embodiment of the present invention. Referring to Fig. 7, the control unit 10 includes a current command generation unit 26.

The current command generation unit 26 receives a speed command, a magnetic flux command, an output of the coordinate conversion unit 21, an output of the output voltage limit unit 23, and an output of the power source phase detector 9 to output the current command value 25 (Ir*, Iδ*).

Any other structure is the same as the one described in the first embodiment. The same components are designated with the same reference numerals, and explanations thereof, thus will be omitted.

Likewise the first embodiment, pulsation lowers the DC voltage applied to the inverter main circuit portion 6 in the second embodiment, which requires limitation of the voltage applied to the motor 5.

In order to satisfy the requirement, the voltage applied to the motor 5 is lowered under the field weakening control (as disclosed in Patent Document 1, for example). The magnetic field generated by the rotor of the motor 5 is weakened by the field output from the stator.

The aforementioned art requires the current for weakening the field of the rotor to be applied to the stator of the motor 5, thus deteriorating the efficiency.

In the second embodiment, in the state which demands limitation of the voltage applied to the motor 5, the r-axis current is appropriately controlled to allow the weakening field to be naturally performed instead of newly applying the current for weakening the field of the rotor.

The aforementioned control allows the current flowing to the stator for weakening the field to be minimized, thus alleviating the concern with respect to efficiency deterioration.

In the second embodiment, the total magnetic flux amount of the motor 5 is controlled to be kept at a constant value for realizing the aforementioned control. The total magnetic flux denotes the composite vector formed from the magnetic flux generated by the stator of the motor 5 and the magnetic flux generated by the rotor.

The procedure for controlling the total magnetic flux amount of the motor 5 to be held constant will be described, and then the specific structure of the second embodiment will be described.

(1) Procedure for controlling total magnetic flux amount to be constant

According to Faraday's law, the change rate of total magnetic flux dΦ/dt is equal to the difference between the voltage applied to the motor 5 and the voltage drop caused by the phase resistance of the motor 5.

The voltage applied to the motor 5 is synonymous with the voltage output from the inverter main circuit portion 6 (Vr, Vδ).

The voltage drop caused by the phase resistance of the motor 5 may be obtained from the phase resistance R and r-axis and δ-axis currents (Ir, Iδ).

The operation for keeping the total magnetic flux amount constant is equal to the operation for keeping the total magnetic flux unchanged, that is, keeping the change rate value of the total magnetic flux dΦ/dt zero as in the following equation (4).

$$d\Phi/dt = (\text{voltage applied to motor 5}) - (\text{voltage drop caused}$$

$$\text{by phase resistance of motor 5}) = 0, \text{ that is,}$$

$$\phi = \int(\text{voltage applied to motor 5} - \text{voltage drop caused by}$$

$$\text{phase resistance of motor 5})dt = \text{const} \dots (4)$$

When the voltage applied to the motor 5 (Vr, Vδ) drops, the r-axis and δ-axis currents (Ir, Iδ) are controlled in accordance with the voltage drop to allow the total magnetic flux amount of the motor 5 to be kept constant.

The r-axis current is relevant to the field weakening operation. The current Ir is controlled upon decrease in the voltage applied to the motor 5 owing to pulsation of DC voltage to allow the field weakening operation to be naturally performed.

(2) Specific structure of the second embodiment

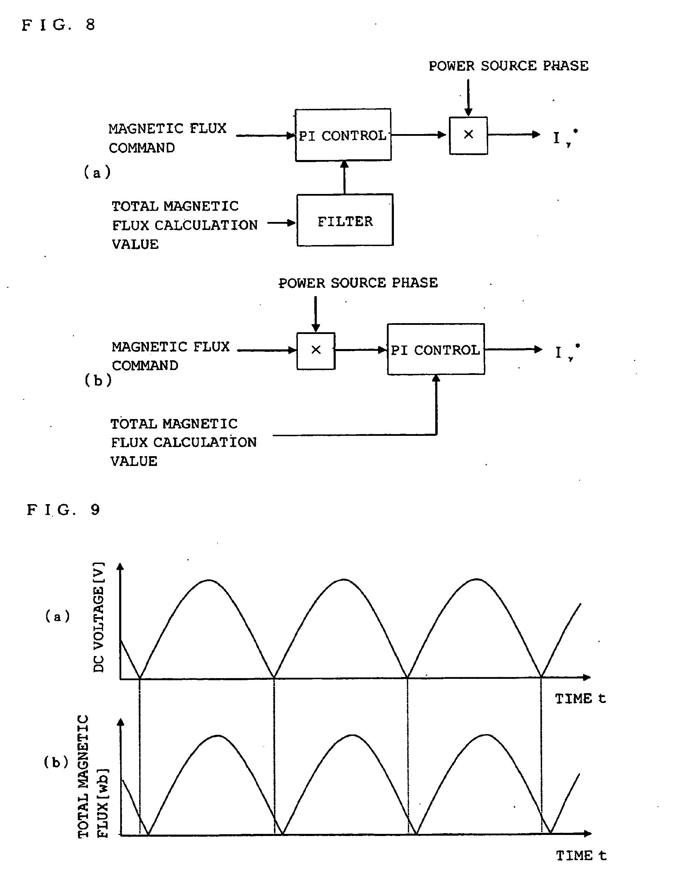

Fig. 8 shows a structure of the current command generation unit 26.

The current command generation unit 26 receives the magnetic flux command, values (Vr, Vδ) output from the output voltage limit unit 23, and values (Ir, Iδ) output from the coordinate conversion unit 21 as inputs.

Then the total magnetic flux calculation value of the motor 5 is obtained using the aforementioned calculation process. Based on the difference between the magnetic flux command and the total magnetic flux calculation value, the proportional-integral control calculation is performed to output the r-axis current command value Ir* so as to keep the total magnetic flux amount of the motor 5 constant. It is assumed that the phase resistance R is the known value.

When the pulsation of the DC voltage lowers the voltage applied to the motor 5, the Ir is controlled to satisfy the equation (4) by outputting the r-axis current command value Ir*, thus naturally realizing the field weakening operation.

Likewise the first embodiment, the current command value Ir* is controlled to pulsate in synchronization with the single-phase AC source 1 to reflect the detected value of the power source phase on the output of the current command value Ir*.

Fig. 8(a) shows the structure for reflecting the power source phase after the proportional-integral control calculation. In this case, the total magnetic flux is controlled to be constant.

Fig. 8(b) shows the structure for performing the proportional-integral control after multiplying the magnetic flux command by the power source phase. In this case, as the magnetic flux command itself as the control reference value is pulsating, the average value of the total magnetic flux is controlled to be kept constant.

Fig. 9 shows the state where the total magnetic flux of the motor 5 pulsates.

Referring to Fig. 9, the total magnetic flux pulsates in synchronization with the pulsation of the DC voltage. Accordingly, the motor driver provides the same effects not only by the structure to keep the total magnetic flux constant as shown in Fig. 8(a), but also by the structure to output the r-axis current command to pulsate for keeping the average value of the total magnetic flux constant as shown in Fig. 8 (b)

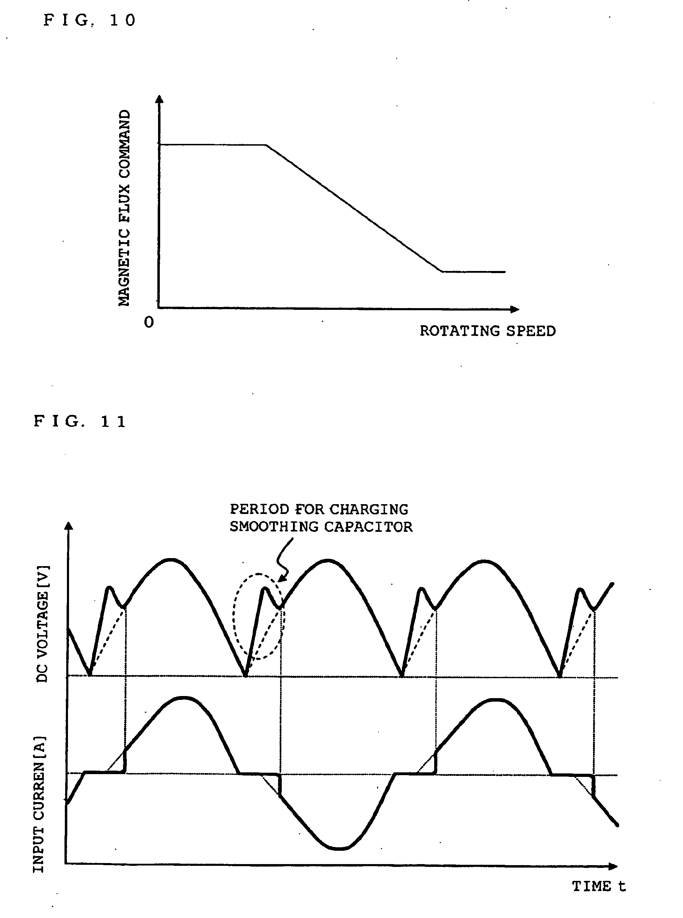

Fig. 10 is a view showing the correlation between the rotating speed of the motor 5 and the magnetic flux command which is changed in accordance with the rotating speed.

Generally, as the rotating speed of the motor 5 becomes high, it is unlikely to be accelerated even if the current applied to the motor 5 is increased. For this, the field of the rotor is weakened under the field weakening control so as to further increase the rotating speed.

Even in the high rotating speed region, it is preferable to allow the field weakening operation to be naturally performed in view of the operation efficiency.

As the rotating speed of the motor 5 becomes higher, the magnetic flux command is decreased as shown in Fig. 10 to reduce the total magnetic flux amount to be kept constant accordingly. This may naturally realize the field weakening operation, resulting in efficient operation of the motor 5.

If the total magnetic flux is excessively reduced, the operation of the motor 5 may be interfered. So it is preferable to set a predetermined lower limit value of the magnetic flux command as shown in Fig. 10.

The operation to be performed to cope with the increase in the harmonic content of the input current caused by the regenerative energy of the motor 5 will be described hereinafter.

Fig. 11 shows the DC voltage waveform and the input current waveform upon regeneration of the motor 5.

As the current flowing to the motor 5 is controlled to have the similar waveform to that of the voltage of the single-phase AC source 1 synchronously, the output torque of the motor 5 may be changed from being positive to negative around the zero-crossing of the voltage of the single-phase AC source 1.

This indicates that the state of the motor 5 has chanted from the power running to regeneration. The smoothing capacitor 4 is charged with the regenerative energy from the motor 5.

When the smoothing capacitor 4 is charged with the regenerative energy from the motor 5, supply of the input current from the single-phase AC source 1 is interrupted as the rectification unit 3 formed of the diode has no regenerative function. The flat portion of the input current waveform shown in the lower graph of Fig. 11 corresponds to the portion where input current supply is interrupted.

Referring to Fig. 11, the time period for which the input current supply is interrupted may deform the input current waveform, thus increasing the harmonic content of the input current.

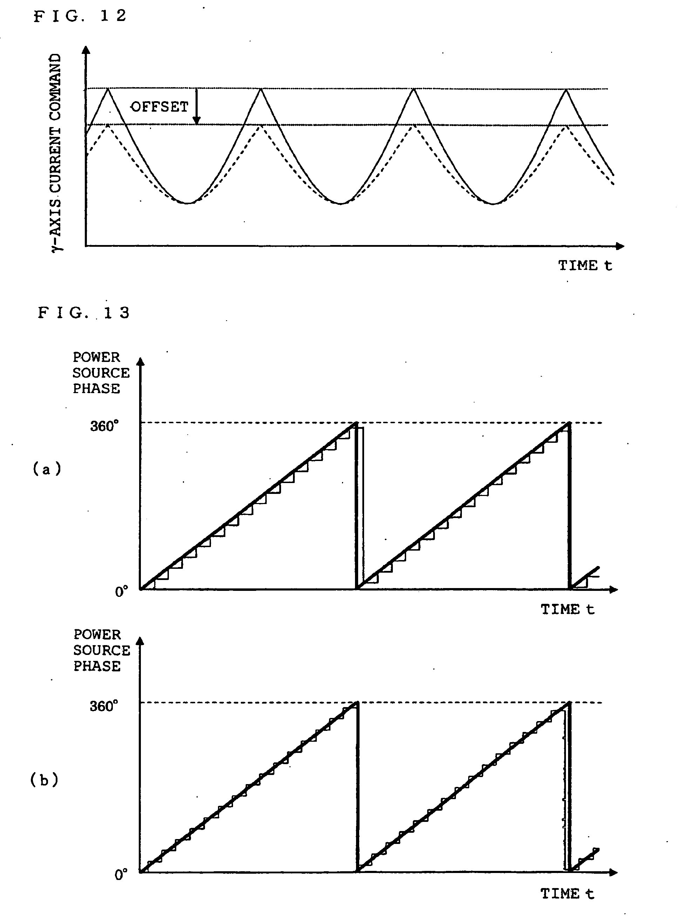

Accordingly, the regenerative energy from the motor 5 is reduced to suppress generation of the harmonic content in the input current. The specific explanation will be described referring to Fig. 12.

Fig. 12 shows an exemplary view for providing an offset for the r-axis current command value Ir*.

Referring to Fig. 12, the high r-axis current command value Ir* around the zero-crossing of the voltage of the single-phase AC source 1 indicates the high current corresponding to the regenerative operation direction during the period shown in Fig. 11 for which supply of the input current is interrupted.

In the second embodiment, as the motor 5 is driven by the minimum field weakened current, the motor 5 regenerates around the zero-crossing of the single-phase AC source 1.

Then the predetermined offset is provided for the r-axis current command value Ir* in the phase corresponding to the zero-crossing of the single-phase AC source 1.

The aforementioned structure reduces the current in the regenerative operation direction around the zero-crossing of the voltage of the single-phase AC source 1. This makes it possible to suppress the regenerative operation of the motor 5 immediately after the zero-crossing of the single-phase AC source 1, and to further suppress the harmonic content of the input current.

Specifically, the r-axis current command value Ir* is subjected to the following calculation correction to provide the offset around the zero-crossing as described above.

(1) The amplitude (difference between the upper limit and the lower limit) of the value Ir* is decreased at a predetermined rate.
(2) Then the Ir* is offset entirely.
(3) The offset value is adjusted such that values previous and subsequent to the offset accord with each other at the peak point of the single-phase AC source 1.

The aforementioned structure without clamping circuits and surge absorbers is capable of suppressing the DC voltage rise caused by the regenerative energy to realize reliability at the same level as the one derived from the structure provided with clamping circuits and surge absorbers.

The influence of the sampling accuracy based on the detection value of the power source phase detector 9 to the harmonic content of the input current, and the process for coping with the influence will be described referring to Fig. 13.

Fig. 13 shows waveforms of the actual power source phase and the calculation phase generated by sampling based on the detection value of the power source phase detector 9. The bold line indicates the waveform of the power source phase, and the thin line indicates the waveform of the phase generated by sampling.

Fig. 13(a) shows the waveform resulting from the generally employed sampling.

Generally, during the interval between the samplings, the previous sampling value may be used for calculation. As a result, the calculation phase inevitably delays with respect to the actual power source phase. The aforementioned delay occurs even if the sampling frequency is increased to be higher so long as the sampling is performed.

In the present invention, the current flowing to the motor 5 is controlled such that the waveform becomes similar to that of the single-phase AC source 1. This makes it possible to reduce the harmonic content of the input current while controlling the motor drive. The accuracy of the phase information of the single-phase AC source 1, that is, the accuracy for generating the pulsation command based on the detection value of the power source phase detector 9 markedly contributes to the process for coping with the harmonic content of the input current.

Fig. 13(b) shows the waveform which is compensated to advance the phase by the amount corresponding to the half sampling cycle at the sampling time point.

Referring to Fig. 13(b), when the phase corresponding to the half sampling cycle is advanced, the average value of the sampling substantially accords with the actual power source phase.

The aforementioned structure may be realized only by the software, which may suppress the cost increase as minimum as possible, thus ensuring to cope with the harmonic of the input current at markedly low cost.

The second embodiment shows an exemplary case where the r-axis current command value is calculated under the proportional-integral control as shown in Fig. 8. However, the control is not limited to the one as described above. Any process may be employed to provide the same effects so long as the control allows the magnetic flux command to accord with the total magnetic flux calculation value.

Fig. 10 shows an exemplary case where the magnetic flux command is linearly reduced. However, the magnetic flux command may be reduced using quadratic curve and exponent function.

The second embodiment shows the structure for reducing the harmonic content of the input current by suppressing the regenerative energy of the motor 5. The appropriately designed motor 5 may provide the similar effects. For example, supposing that the motor 5 is formed as an Interior Permanent Magnetic (IPM) motor, the torque of the IPM motor includes the magnet torque and the reluctance torque in accordance with inductance as expressed by the following equation (5).

[Formula 1]

$$\tau = p\Phi_m i_q + p\left(L_q - L_d\right) i_d i_q \quad \ldots \ (5)$$

$\tau$: torque
p: number of polar pairs
$\Phi m$: magnetic flux of permanent magnet
id: d-axis current
iq: q-axis current
Ld: d-axis inductance
Lq: q-axis inductance

The first and the second terms of the equation (5) denote a magnet torque and a reluctance torque, respectively. The summation of the terms defines the torque of the IPM motor.

The regenerative energy is caused by the magnet of the rotor of the motor 5 which rotates to generate the induced voltage. The motor 5 may be designed to make the rate of the second term in the equation (5), that is, the reluctance torque high so as to reduce the influence of the induced voltage caused by the rotation of the magnet without lowering the total torque.

Assuming that the induced voltage constant of the motor is set to $\Phi$[V/rad/s], the motor 5 may be designed to satisfy the following relationship.

$$\phi \le 20 \ \mathrm{x} \ (Lq - Ld) \ldots \ (6)$$

The aforementioned operation corresponds to the one for increasing the rate of the reluctance torque to the total torque in the equation (5).

The above-designed motor 5 with no clamping circuit nor surge absorber is capable of suppressing the DC voltage rise caused by the regenerative energy, thus providing reliability equivalent to that of the structure with clamping circuits and surge absorbers as described above.

In case of the motor which does not generate the reluctance torque resulting from d-axis and q-axis inductance and the magnet torque, the equation (6) cannot be established. Therefore, such motor is required to be excluded from the group of the motor applicable to the equation (6). For example, the inductive motor is considered as not being the applicable one.

Referring to Fig. 13, the phase formed by sampling the power source phase is compensated to advance. However, the same effects may be obtained by compensating the rotational phase angle of the motor 5 to advance.

According to the second embodiment, the control unit 10 calculates the current command value 25 applied to the motor 5, and further calculates the command value (Vr0, Vδ0) of the voltage applied to the motor 5 based on the current command value 25 such that the total magnetic flux amount of the motor 5 is kept constant.

In the case where the voltage (Vr, Vδ) applied to the motor 5 is required to be limited, the r-axis current may be appropriately controlled to suppress the current applied to the stator for weakening the field such that the field weakening operation is naturally performed. This makes it possible to alleviate the concern of the deteriorated efficiency.

The control unit 10 includes a current command generation unit 26 which receives a command value of a magnetic flux of the motor 5 to calculate the command value 25 of the current so as to keep the total magnetic flux amount of the motor 5 constant. The current command generation unit 26 calculates a voltage drop amount caused by a phase resistance R based on the phase resistance R and the phase current of the motor 5, and calculates the total magnetic flux amount based on a difference between the voltage (Vr, Vδ) applied to the motor 5 and the voltage drop amount.

The total magnetic flux amount of the motor 5 may be calculated, based on which the control for allowing the natural field weakening is executed. The sensor or the like does not have to be added, which is advantageous in view of the cost.

As the command value of the magnetic flux of the motor 5 is decreased as a rotating speed of the motor 5 becomes high, the field weakening operation may be efficiently realized even in the high speed rotation region.

As a predetermined lower limit value is set for the command value of the magnetic flux of the motor 5, the excessive field weakening operation hardly interferes with the operation of the motor 5.

The current command generation unit 26 decreases an amplitude of the command value 25 of the current by a predetermined rate so as to be offset with a predetermined value for calculating the command value 25 of the current, and calculates to correct the command value 25 of the current so as to become the same as the command value prior to the offset in a phase corresponding to a peak point of the single-phase AC source 1.

This makes it possible to suppress the regenerative operation of the motor 5 generated immediately after the zero crossing of the single-phase AC source 1 by suppressing the current in the regenerative direction. As a result, the harmonic content of the input current may be suppressed.

The control unit 10 compensates a detection value of the phase of the single-phase AC source 1 or a detection value of a rotating phase of the motor 5 to advance by a phase angular amount corresponding to half a sampling cycle of the control unit 10.

This makes it possible to improve the accuracy of the phase information of the single-phase AC source 1 at lower cost by performing the calculation correction using the software. Accordingly, the process for coping with the harmonic of the input current may be performed at markedly lower cost.

As the motor 5 is allowed to satisfy the condition of the aforementioned equation (6), the DC voltage rise owing to the regenerative energy may be suppressed. The resultant reliability may be equivalent to that of the structure provided with clamping circuits and surge absorbers even if such components are not provided.

Third Embodiment

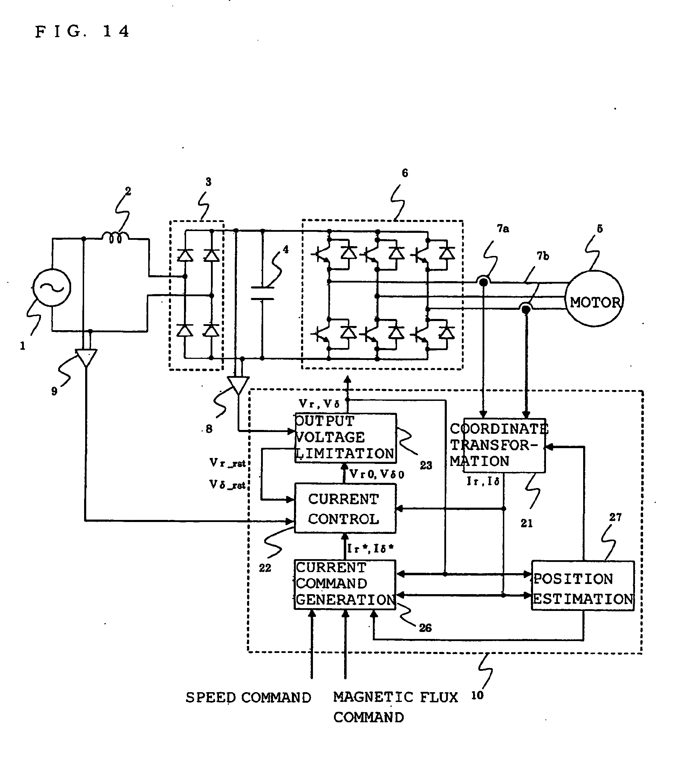

Fig. 14 is a circuit block diagram of a motor driver according to the third embodiment of the present invention. Referring to Fig. 14, the control unit 10 includes a position estimation unit 27.

The position estimation unit 27 receives outputs of the coordinate conversion unit 21, and the output voltage limit unit 23 for estimating the current application phase and the rotating speed of the motor 5.

Any other structures are the same as those of the second embodiment. Accordingly, the same components are designated as the same reference numerals, and explanations thereof, thus will be omitted.

The general problem upon estimation of the current application phase and the rotating speed of the motor 5 will be described first, and then the specific operation of the position estimation unit 27 according to the third embodiment will be described.

When the permanent magnet motor is employed as the motor 5, the torque is controlled by applying current to the coil of the stator in accordance with the magnetic pole position of the rotor when performing the variable speed operation. For this, the position sensor such as the rotary encoder has to be installed in the motor 5.

Various types of methods for executing the sensor-less control have been proposed in view of the reliability and cost. The third embodiment proposes the process for realizing the sensor-less control by allowing the position estimation unit 27 to estimate the rotor position of the motor 5.

The motor 5 is generally modeled using the voltage/current equation as indicated by an equation (7).

[Formula 2]

$$\begin{bmatrix} V_d \\ V_q \end{bmatrix} = \begin{bmatrix} R + pL_d & -\omega L_q \\ \omega L_d & R + pL_q \end{bmatrix} \begin{bmatrix} i_d \\ i_q \end{bmatrix} + \begin{bmatrix} 0 \\ \omega\phi \end{bmatrix} \quad \cdots \quad (7)$$

R: phase resistance
Ld: d-axis inductance
Lq: q-axis inductance
$\phi$ : counter electromotive force
$\omega$: rotational angle speed
p: differential operator

The difference between the ideal value of the model and the actual value of the motor 5 may be obtained from the model expressed in the equation (7) and current and voltage actually applied to the motor. The speed and position are estimated to reduce the difference.

In this way, reduction of the output voltage error as described in the first embodiment is essential when the voltage applied to the motor 5 is used by the position estimation unit 27.

In the considerably low rotating speed region (approximately 1/20 or lower of the maximum rotating speed) in the early start-up timing, the voltage actually output from the inverter main circuit portion 6 does not completely accord with the command voltage (Vr, Vδ) sent from the control unit 10 because of the influence of the semiconductor employed in the inverter main circuit portion 6 and the time period for avoiding the short-circuit as has been described in the first embodiment.

In the aforementioned case, the calculation error occurs in the estimated speed or position, thus failing to realize the smooth driving operation.

The position estimation unit 27 according to the third embodiment is capable of smoothly activating the motor 5 and realizing the position-sensor-less drive with respect to the motor irrespective of the condition where the DC voltage pulsates owing to small capacitance of the smoothing capacitor 4.

The specific operation of the position estimation unit 27 according to the third embodiment will be described.

When the motor 5 in the stopped state is activated, the open loop control is performed in the considerably low rotational speed region in the early start-up timing.

The open loop denotes the operation of the coordinate conversion unit 21 without using outputs of the position estimation unit 27. In other words, as no position sensor is used, nor position is estimated, the operation is performed in the state where the current is applied irrelevant to the rotor position of the motor 5.

The voltage and frequency required for activation are applied to the motor 5 so as to be brought into the open loop to start rotating. Although the open loop control fails to follow up the momentary load torque or the sharp acceleration, such control is sufficiently operated upon rotation in the considerably low speed state immediately after the activation.

When the rotating speed of the motor 5 reaches the constant value from the open loop rotation state, the operation mode is switched to the closed loop rotation state. In the closed loop state, the position is estimated based on the output voltage of the inverter main circuit portion 6 and the phase current of the motor 5, and then, the output voltage of the inverter main circuit portion 6 and the phase current of the motor 5 are subjected to the coordinate transformation at the estimated position.

In the closed loop state, the rotor position is estimated by the position estimation unit 27 instead of using the position sensor. The operation is performed in the current application state in accordance with the (estimated) position of the rotor of the motor 5.

Generally, in the considerably low rotating speed region of the motor 5, as signals derived from the phase current detectors 7a and 7b are weakened, it is very difficult to accurately estimate the position of the motor 5.

In the considerably low rotating speed region, the open loop control is executed. The open loop control is then switched to the closed loop control at the stage where the rotating speed has reached the predetermined value or higher, resulting in the smooth control operation.

The abrupt control switching may cause the control values to be discontinuous, thus bringing the control into unstable. The method for solving the aforementioned problems will be described hereinafter.

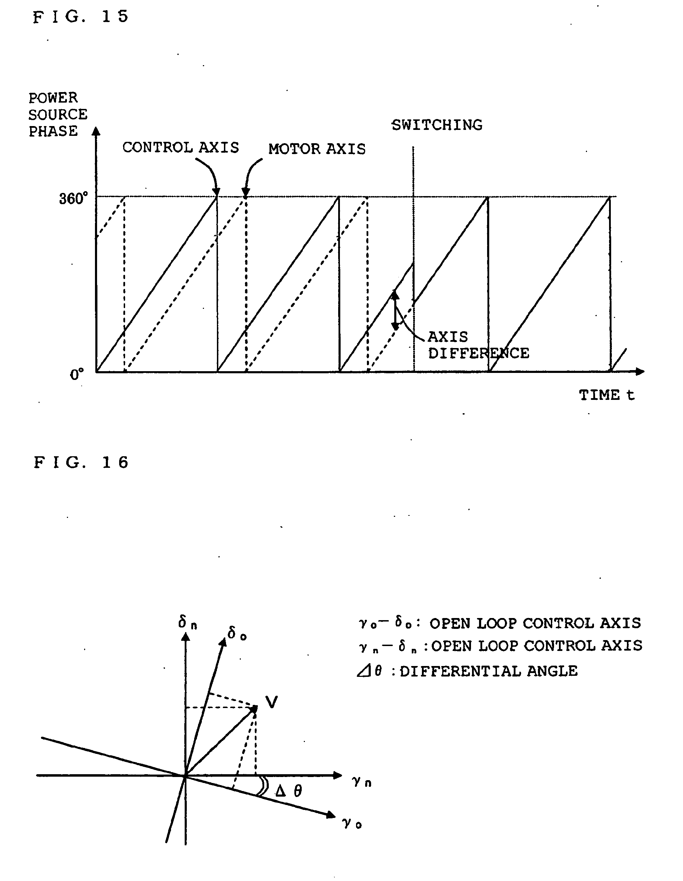

Fig. 15 shows a waveform indicating the timing for switching the open loop operation to the closed loop operation.

In the open loop operation, as the current is applied irrelevant to the position of the rotor of the motor 5, the phase of the rotor (motor axis shown in Fig. 15) follows behind the phase output from the inverter main circuit portion 6 (control axis shown in Fig. 15).

. The motor 5 is accelerated to the rotating speed at which the estimation of the position and the speed is not influenced by the output voltage error, and the difference angle Δ6 between the control axis and the motor axis is obtained using the generally employed voltage current equation of the motor 5 as in the following equation (8).

[Formula 3]

$$\begin{bmatrix} V_\gamma \\ V_\delta \end{bmatrix} = \begin{bmatrix} R - \omega 1 \cdot L_{\gamma\delta} + pL_\gamma & -\omega 1 \cdot L_\delta + pL_{\gamma\delta} \\ \omega 1 \cdot L_\gamma + pL_{\gamma\delta} & R + \omega 1 \cdot L_{\gamma\delta} + pL_\delta \end{bmatrix} \begin{bmatrix} i_\gamma \\ i_\delta \end{bmatrix} + \omega 1 \cdot \phi \begin{bmatrix} -\sin(\Delta\theta) \\ \cos(\Delta\theta) \end{bmatrix} \quad \dots (8)$$

where

$$\Delta\theta = \theta_r - \theta_m$$

$$L_\gamma = \frac{1}{2}\{(Ld + Lq) + (Ld - Lq)\cdot \cos(2\Delta\theta)\}$$

$$L_\delta = \frac{1}{2}\{(Ld + Lq) - (Ld - Lq)\cdot \cos(2\Delta\theta)\}$$

$$L_{\gamma\delta} = \frac{1}{2}\cdot (Ld - Lq)\cdot \sin(2\Delta\theta)$$

θm: rotation position on the control axis (γδ-axis)
θr: rotation position on the motor axis (dq-axis)
ω1: angular speed on the control axis

The calculation correction using the Δθ derived from the equation (8) will be described.
At the timing for switching the operation from the open loop to the closed loop as shown in Fig. 15, the phase output from the inverter main circuit portion 6 (control axis shown in Fig. 15) does not accord with the phase of the rotor (motor axis shown in Fig. 15) as described above. In other words, the estimated phase does not accord with the actual current application phase at the timing.
The closed loop control is started from the current application phase obtained by subtracting the differential angle Δθ. If the phase of the control axis accords with the phase of the motor axis at the time point for starting the closed loop control, the control based on the position estimated by the position estimation unit 27 may be executed onward.
As the closed loop control is started from the position where the differential angle Δθ derived from the equation (8) is subtracted, the phase of the control axis sharply changes at the switching timing shown in Fig. 15.
Fig. 16 is a vector view for the purpose of the comparison between voltage (Vro, Vδo) when viewed from the control axis (ro-δo) on the open loop and voltage (Vro, Vδo) when viewed from the control axis (rn-δn) on the closed loop at the same output voltage.
As the switching time point shows in Fig. 15, the control axis largely changes upon the switching operation. Accordingly, values of the output voltage and applied current largely change on the control axis, which may apply to the current.
When the current and voltage largely fluctuate resulting from switching of the axis, the use of the integrator inside the current control unit 22 and the current command generation unit 26 may ruin the control operation owing to the abrupt fluctuation.
Values of the voltage and current on the control axis are adjusted by the amount corresponding to the difference Δθ such that the values of the output voltage of the inverter main circuit portion 6 and the phase current of the motor 5 have continuity irrespective of switching the control axis for smoothly switching the coordinate axis.
The adjustment is performed using the following equation (9). The integrator is initialized for starting the closed loop control based on the adjusted values of the r-axis and δ-axis voltages and currents.
Initialization of the integrator keeps the continuity in the output voltage of the inverter main circuit portion 6 and the phase current of the motor 5 to continue the smooth control operation even if the control axis is abruptly switched as the switching time point in Fig. 15 shows.

[Formula 4]

$$\begin{bmatrix} V_{rn} \\ V_{\delta n} \end{bmatrix} = \begin{bmatrix} \cos(\Delta\theta) & \sin(\Delta\theta) \\ -\sin(\Delta\theta) & \cos(\Delta\theta) \end{bmatrix} \begin{bmatrix} V_{ro} \\ V_{\delta o} \end{bmatrix} \quad \cdots \quad (9)$$

The control is switched to the closed loop where the difference between the control axis and the rotating axis of the motor in the open loop state is set as the initial value. This may smoothly switch the operation from the open loop drive to the position-sensor-less drive in the closed loop through the arbitrary position-sensor-less process rather than the one exclusive for the capacitor with small capacitance which causes pulsation of the DC voltage.

The adjustment of the axes of the voltage/current upon switching of the control axis from the open loop to the closed loop, and the position-sensor-less drive of the closed loop having the adjusted value as the initial value of the integrator used for the control are started. This makes it possible to execute the control for reducing the harmonic content of the input current while driving the motor 5 under the arbitrary position sensor-less process instead of the one exclusively for the capacitor with small capacitance having the DC voltage pulsating.

Fig. 17 shows the current command values of the r-axis and δ-axis upon switching of the control from the open loop to the closed loop.

The current value of the adjusted axis is input to the integrator of the current command generation unit 26 as the initial value. The motor 5 is operated in the excessively magnetized state under the open loop control. At the time point for switching the control from the open loop to the closed loop, the excessive current flows on the r-axis as the magnetic flux content axis.

When the permanent magnet motor is employed as the motor 5, the r-axis current is generally brought into negative to realize the field weakening operation.

Referring to Fig. 17, the current command value on the r-axis is set to 0 upon switching operation, and the current command value on the δ-axis is set to the scalar value of the current under the open loop control for keeping the current continuity.

This momentarily reduces the current flowing to the motor 5 so as to momentarily complete the transition to the position-sensor-less control in the closed loop state.

The r-axis current command value may be set to 0, and the δ-axis current command value may be the one corresponding to 75% of the current scalar value under the open loop state.

Although the current largely fluctuates momentarily from the aspect of the current continuity, the period for which the open loop control is executed is set in consideration with the excessively magnetized state as the current command upon the open loop control is set to 0.

The r-axis side is set to 0 in the excessive magnetized state, and the ripple upon acceleration in the closed loop state may be suppressed by reducing the current command to alleviate the magnetized state at the δ-axis side. It is effective to set the δ-axis current command value to the value 75% of the current scalar value in the open loop state.

When the adjusted value of the current on the axis upon switching of the control from the open loop to the closed loop is set to the initial value for the current command, the motor 5 is operated in the excessively magnetized state. In consideration with the aforementioned state, the initial value of the current command value is set to the value smaller than the adjusted value such that the transition to the closed loop may be smoothly and quickly performed. The acceleration of the position-sensor-less drive in the closed loop state may be performed without the speed ripple.

As the equation (1) shows, when the permanent magnet motor is employed as the motor 5, the δ-axis value influences the r-axis value, and vice versa, that is, mutual interference occurs.

The mutual interference brings the control into the unstable state. The output of the current control unit 22 is compensated to suppress the aforementioned mutual interference. The aforementioned structure does not deteriorate the effect of the present invention.

According to the third embodiment, the control unit 10 includes a position estimation unit 27 which estimates the rotating phase of the motor 5 based on the current flowing to the motor 5 and the voltage applied to the motor 5. Upon activation of the motor 5, the coordinate conversion unit 21 performs an open loop operation for a coordinate transformation based on the phase current of the motor 5, and further performs a closed loop operation for the coordinate transformation in a phase estimated by the position estimation unit 27 after a rotating speed of the motor 5 reaches a predetermined value.

In the considerably low rotating speed region with difficulty in execution of the sensor-less control, the open loop control is executed. The control is switched from the open loop to the closed loop when the rotating speed reaches the predetermined value or higher, thus allowing the smooth control operation.

The coordinate conversion unit 21 calculates a difference value between a phase after coordinate transforming the voltage applied to the motor 5 and a rotating phase of the motor 5, and corrects a rotating coordinate angle before starting the coordinate transformation using the difference value for starting the coordinate transformation in the phase estimated by the position estimation unit 27.

The discontinuity of the values upon switching of the control from the open loop to the closed loop may be corrected to overcome the trouble caused by execution of the open loop control and the closed loop control simultaneously.

In the case where the control unit 10 or the unit included therein performs a control calculation which includes an integral control, when the coordinate conversion unit 21 starts the coordinate transformation in the phase estimated by the position estimation unit 27, a calculation for adjusting the voltage or the current after coordinate transforming the voltage applied to the motor 5 is performed with a rotating matrix based on the difference value, and a calculator for performing the integral control is initialized using the adjusted voltage or the adjusted current.

This makes it possible to avoid the risk to ruin the integral control upon switching of the control from the open loop to the closed loop, thus providing the stable control calculation.

When the calculator for performing the integral control is initialized using the adjusted current, among the command values 25 of the current, a content corresponding to a magnetic flux axis is set to 0, and a content corresponding to a torque axis is set to a scalar value of the current before initializing the integrator.

The current flowing to the motor 5 may be momentarily reduced to complete the transition to the position-sensor-less mode in the closed loop state momentarily.

The r-axis current command value is set to 0, and the δ-axis current command value is set to the value which is 75% of the current scalar value in the open loop state so as to suppress the ripple upon acceleration in the closed loop state.

The control unit 10 controls to compensate interference contents of axes of the motor 5 into an output of the current control unit 22.

This makes it possible to suppress generation of the mutual interference, thus enhancing the control stability.

Fourth Embodiment

A compressor according to the fourth embodiment is driven by operating the motor activated by the motor driver as described in the first to third embodiment.

When the compressor according to the fourth embodiment is employed as the air conditioning system, the entire structure may be made compact by using the smoothing capacitor 4 with small capacitance, or not using such smoothing capacitor 4, thus providing the structure of compact and low cost.

The harmonic content of the input current may be reduced. This makes it possible to provide the air conditioning system conforming to the regulation with respect to the harmonic current at the place where the air conditioning system is expected to be installed.

Among components which constitute the motor driver according to the first to fourth embodiments, the component referred to as the "unit" may be formed of any one of the device, equipment, circuit, program, or program/CPU corresponding thereto.

**Claims**

1.  A motor driver comprising:

       a rectifying unit(3) for rectifying an AC voltage from an AC source(1) to a DC voltage;
       a power conversion unit(6) for converting the DC voltage output from the rectifying unit(3) into the AC voltage so as to be applied to a motor(5); and
       a control unit(10) for controlling the voltage applied to the motor(5) from the power conversion unit(6), wherein:
       the control unit(10) includes an output voltage limit unit(23) which executes a control such that a scalar value of the voltage applied to the motor(5) becomes equal to or lower than a maximum output voltage defined by the DC voltage output from the rectifying unit(3);
       an amount of a voltage limited by the output voltage limit unit(23) is fed back to the control unit(10);
       the control unit(10) includes a current control unit(22) which receives a command value of a current applied to the motor(5), and outputs a command value of a voltage applied to the motor(5) based on the command value of the current; and
       the output voltage limit unit(23) receives the command value of the voltage from the current control unit(22), calculates the scalar value of the command value of the voltage, and limits the voltage applied to the motor(5) when the scalar value exceeds the maximum output voltage defined by the DC voltage output from the rectifying unit(3);
       **characterized in that** the current control unit(22) includes an integrator, and calculates the command value of the voltage by allowing the integrator to perform a control calculation including an integral control so as to be output;
       the output voltage limit unit(23) feeds back the voltage limit amount to the current control unit(22); and
       the current control unit(22) subtracts the voltage limit amount fed back by the output voltage limit unit(23) from an output value of the integrator.

2.  The motor driver according to claim 1, wherein:

       the output voltage limit unit(23) performs the limitation only when the scalar value of the command value of the voltage exceeds the maximum output voltage defined by the DC voltage output from the rectifying unit(3), and feeds back the voltage limit amount to the current control unit(22); and
       the current control unit(22) performs the subtraction only when receiving the feedback of the voltage limit amount from the output voltage limit unit(23).

3. The motor driver according to any one of claims 1 to 2, wherein the current control unit(22) outputs the command value of the voltage such that waveform of the current flowing to the motor(5) becomes similar to that of the AC voltage from the AC source(1).

4. A motor driver comprising:

a rectifying unit(3) for rectifying an AC voltage from an AC source(1) to a DC voltage;
a power conversion unit(6) for converting the DC voltage output from the rectifying unit(3) into the AC voltage so as to be applied to a motor(5); and
a control unit(10) for controlling the voltage applied to the motor(5) from the power conversion unit(6), wherein:
the control unit(10) includes an output voltage limit unit(23) which executes a control such that a scalar value of the voltage applied to the motor(5) becomes equal to or lower than a maximum output voltage defined by the DC voltage output from the rectifying unit(3);
an amount of a voltage limited by the output voltage limit unit(23) is fed back to the control unit(10);
the control unit(10) calculates the command value of the current so as to keep a total magnetic flux amount of the motor(5) constant;
the control unit(10) includes a current command generation unit(26) which receives a command value of a magnetic flux of the motor(5) to calculate the command value of the current so as to keep the total magnetic flux amount of the motor(5) constant; and
the current command generation unit(26) calculates a voltage drop amount caused by a phase resistance based on the phase resistance and the phase current of the motor(5), and calculates the total magnetic flux amount based on a difference between the voltage applied to the motor(5) and the voltage drop amount;
**characterized in that** a predetermined offset is provided for a phase corresponding to a zero-crossing point of the AC source(1) when the current command generation unit(26) calculates the command value of the current, and
the current command generation unit(26) decreases an amplitude of the command value of the current by a predetermined rate so as to be offset with a predetermined value for calculating the command value of the current, and calculates to correct the command value of the current so as to become the same as the command value prior to the offset in a phase corresponding to a peak point of the AC source(1).

5. The motor driver according to claim 4, wherein the command value of the magnetic flux of the motor(5) is decreased as a rotating speed of the motor(5) becomes high.

6. The motor driver according to claim 5, wherein a predetermined lower limit value is set for the command value of the magnetic flux of the motor(5).

7. The motor driver according to any one of claims 1 to 6, wherein:

the control unit(10) includes a coordinate conversion unit(21) for transforming a phase current of the motor(5) detected by the phase current detector into an orthogonal biaxial coordinate system;
the coordinate conversion unit(21) outputs a coordinate transformed current value to the current control unit (22); and
the current control unit(22) outputs the command value of the voltage based on the command value of the coordinate transformed current and an output of the coordinate conversion unit(21).

8. The motor driver according to claim 7, wherein the current control unit(22) outputs command values of the two coordinate transformed coordinate axes for outputting the command value of the voltage; and
the output voltage limit unit(23) limits the voltage applied to the motor(5) based on the command value of the voltage.

9. The motor driver according to any one of claims 1 to 8, wherein the control unit(10) compensates a detection value of the phase of the AC source(1) or a detection value of a rotating phase of the motor(5) to advance by a phase angular amount corresponding to half a sampling cycle of the control unit(10).

10. The motor driver according to any one of claims 7 to 9, wherein the control unit(10) includes a position estimation unit(27) which estimates the rotating phase of the motor(5) based on the current flowing to the motor(5) and the voltage applied to the motor(5).

**11.** The motor driver according to claim 10, wherein the coordinate conversion unit(21) performs a coordinate transformation upon activation of the motor(5) based on the phase current of the motor(5), and further performs the coordinate transformation in a phase estimated by the position estimation unit(27) after a rotating speed of the motor(5) reaches a predetermined value.

**12.** The motor driver according to claim 11, wherein the coordinate conversion unit(21) calculates a difference value between a phase after coordinate transforming the voltage applied to the motor(5) and a rotating phase of the motor (5), and corrects a rotating coordinate angle before starting the coordinate transformation using the difference value for starting the coordinate transformation in the phase estimated by the position estimation unit(27).

**13.** The motor driver according to claim 12, wherein:

in the case where the control unit(10) or the unit included therein performs a control calculation which includes an integral control, when the coordinate conversion unit(21) starts the coordinate transformation in the phase estimated by the position estimation unit(27), a calculation for adjusting the voltage or the current after coordinate transforming the voltage applied to the motor(5) is performed with a rotating matrix based on the difference value, and a calculator for performing the integral control is initialized using the adjusted voltage or the adjusted current.

**14.** The motor driver according to claim 13, wherein when the calculator for performing the integral control is initialized using the adjusted current, among the command values of the current, a content corresponding to a magnetic flux axis is set to 0, and a content corresponding to a torque axis is set to a scalar value of the current before initializing the integrator.

**15.** The motor driver according to any one of claims 1 to 14, wherein the control unit(10) controls to compensate interference contents of axes of the motor(5) into an output of the current control unit(22).

**16.** The motor driver according to any one of claims 1 to 15 for controlling the motor(5) which satisfies a following equation (1).

$$\Phi \leq 20 \ \text{x} \ (\text{Lq} - \text{Ld}) \ \dots \ (1)$$

$\Phi$: induced voltage constant of a motor
Ld: d-axis inductance
Lq: q-axis inductance

**17.** The motor driver according to any one of claims 1 to 16 , wherein a capacitor(4) for smoothing the voltage rectified by the rectifying unit(3) is connected to an output side of the rectifying unit(3); and
a capacitance of the capacitor(4) is reduced to a level to cause a power source ripple which largely pulsates at a frequency double the frequency of the AC source(1).

**18.** The motor driver according to claim 17, wherein a coil(2) is disposed between the capacitor(4) and the AC source(1).

**19.** The motor driver according to claim 18, wherein a resonance frequency of the capacitor(4) and the coil(2) becomes 41 times higher than the frequency of the AC source(1).

**20.** The motor driver according to claim 1, further comprising a phase current detector for detecting a phase current flowing to the motor(5), wherein the current control unit(22) outputs the command value of the voltage applied to the motor(5) based on the command value of the current and an output of the phase current detector.

**21.** The motor driver according to claim 3, further comprising a power source phase detector(9) for detecting a phase of the AC source(1), wherein:

the control unit(10) generates a sinusoidal waveform which is similar to that of the AC voltage from the AC source(1) based on the phase of the AC source(1) detected by the power source phase detector(9); and
the command value of the current is multiplied by the sinusoidal waveform so as to be output to the current control unit(22).

22. A compressor drive comprising:

the motor driver according to any one of claims 1 to 21; and
a motor driven by the motor driver, wherein a compressor is driven by the motor.

**Patentansprüche**

1. Motortreiber, welcher aufweist:

eine Gleichrichtungseinheit (3) zum Gleichrichten einer Wechselspannung von einer Wechselstromquelle (1) in eine Gleichspannung;
eine Leistungsumwandlungseinheit (6) zum Umwandeln der von der Gleichrichtungseinheit (3) ausgegebenen Gleichspannung in die Wechselspannung, um an einen Motor (5) angelegt zu werden; und
eine Steuereinheit (10) zum Steuern der von der Leistungsumwandlungseinheit (6) an den Motor (5) angelegten Spannung, wobei:
die Steuereinheit (10) eine Ausgangsspannungs-Begrenzungseinheit (23) enthält, die eine Steuerung derart durchführt, dass ein skalarer Wert der an den Motor (5) angelegten Spannung gleich einer oder niedriger als eine maximale Ausgangsspannung, die durch die von der Gleichrichtungseinheit (3) ausgegebene Gleichspannung definiert ist, wird;
ein Betrag einer durch die Ausgangsspannungs-Begrenzungseinheit (23) begrenzten Spannung zu der Steuereinheit (10) zurückgeführt wird;
die Steuereinheit (10) eine Stromsteuereinheit (22) enthält, die einen Befehlswert für einen zu dem Motor (5) gelieferten Strom empfängt und einen Befehlswort für eine an den Motor (5) angelegte Spannung auf der Grundlage des Befehlswerts für den Strom ausgibt; und
die Ausgangsspannungs-Bcgrenzungseinheit (23) den Befehlswert für die Spannung von der Stromsteuereinheit (22) empfang, den skalaren Wert des Befehlswerts für die Spannung berechnet und die an den Motor (5) angelegte Spannung begrenzt, wenn der skalare Wert die durch die von der Gleichrichtungseinheit (3) ausgegebene Gleichspannung definierte maximale Ausgangsspannung überschreitet;
**dadurch gekennzeichnet, dass** die Stromsteuereinheit (22) einen Integrator enthält und den Befehlswert für die Spannung berechnet, indem dem Integrator ermöglicht wird, eine Steuerberechnung enthaltend eine Integralsteuerung durchzuführen, um ausgegeben zu werden;
die Ausgangsspannungs-Begrenzungseinheit (23) den Spannungsbegrenzungsbetrag zu der Stromsteuereinheit (22) zurückFührt; und
die Stromsteuereinheit (22) den durch die Ausgangsspannungs-Begrenzungseinheit (23) zurückgeführten Spannungsbegrenzungsbetrag von einem Ausgangswert des Integrators subtrahiert.

2. Motortreiber nach Anspruch 1, bei dem:

die Ausgangsspannungs-Begrenzungseinheit (23) die Begrenzung nur durchführt, wenn der skalare Wert des Befehlswerts für die Spannung die durch die von der Gleichrichtungseinheit (3) ausgegebene Gleichspannung definierte maximale Ausgangsspannung überschreitet, und den Spannungsbegrenzungsbetrag zu der Stromsteuereinheit (22) zurückführt; und
die Stromsteuereinheit (22) die Subtraktion nur durchführt, wenn die Rückführung des Spannungsbegrenzungsbetrags von der Ausgangsspannungs-Begrenzungseinheit (23) empfangen wird.

3. Motortreiber nach einem der Ansprüche 1 bis 2, bei dem die Stromsteuereinheit (22) den Befehlswert für die Spannung derart ausgibt, dass die Wellenform des zu dem Motor (5) fließenden Stroms ähnlich der der Wechselspannung von der Wechselstromquelle (1) wird.

4. Motortreiber, welcher aufweist:

eine Gteichrichtungseinheit (3) zum Gleichrichten einer Wechselspannung von einer Wechselstromquelle (1) in eine Gleichspannung;
eine Leistungsumwandlungseinheit (6) zum Umwandeln der von der Gleichrichtungseinheit (3) ausgegebenen Gleichspannung in die Wechselspannung, um an einen Motor (5) angelegt zu werden; und

eine Steuereinheit (10) zum Steuern der von der Leistungsumwandlungseinheit (6) an den Motor (5) angelegten Spannung, wobei:

die Steuereinheit (10) eine Ausgangsspannungs-Begrenzungseinheit (23) enthält, die eine Steuerung derart durchführe, dass ein skalarer Wert der an den Motor (5) angelegten Spannung gleich einer oder niedriger als eine maximale Ausgangsspannung, die durch die von der Gleichrichtungseinheit (3) ausgegebene Gleichspannung definiert ist, wird;

ein Betrag einer durch die Ausgangsspannungs-Begrenzungseinheit (23) begrenzten Spannung zu der Steuereinheit (10) zurückgeführt wird;

die Steuereinheit (10) den Befehlswert für den Strom so berechnet, dass ein Gesamtbetrag des magnetischen Flusses des Motors (5) konstant gehalten wird;

die Steuereinheit (10) eine Strombefehls-Erzeugungseinheit (26) enthält, die einen Befehlswert für einen magnetischen Fluss des Motors (5) empfängt, um den Befehlswert für den Strom zu berechnen, um den Gesamtbetrag des magnetischen Flusses des Motors (5) konstant zu halten; und

die Strombefehls-Erzeugungseinheit (26) einen Spannungsabfallbetrag berechnet, der durch einen Phasenwiderstand auf der Grundlage des Phasenwiderstands und des Phasenstroms des Motors (5) bewirkt wird, und den Gesamtbetrag des magnetischen Flusses auf der Grundlage einer Differenz zwischen der an den Motor (5) angelegten Spannung und dem Spannungsabfallbetrag berechnet;

**dadurch gekennzeichnet, dass** eine vorbestimmte Versetzung für eine Phase entsprechend einem Nulldurchgangspunkt der Wechselstromquelle (1) vorgesehen ist, wenn die Strombefehls-Erzeugungseinheit (26) den Befehlswert für den Strom berechnet, und

die Strombefehls-Erzeugungseinheit (26) eine Amplitude des Befehlswerts für den Strom um eine vorbestimmte Rate so herabsetzt. dass er mit einem vorbestimmten Wert zum Berechnen des Befehlswerts für den Strom versetzt ist, und eine Korrektur des Stromwertes für den Strom so berechnet, dass er derselbe wie der Befehlswert vor der Versetzung in einer Phase entsprechend einem Spitzenpunkt der Wechselstromquelle (1) wird.

5. Motortreiber nach Anspruch 4, bei dem der Befehlswert für den magnetischen Fluss des Motors (5) herabgesetzt wird, wenn die Drehgeschwindigkeit des Motors (5) hoch wird.

6. Motortreiber nach Anspruch 5, bei dem ein vorbestimmter unterer Grenzwert für den Befehlswert für den magnetischen Fluss des Motors (5) gesetzt ist.

7. Motortreiber nach einem der Ansprüche 1 bis 6, bei dem:

die Steuereinheit (10) eine Koordinatenumwandlungseinheit (21) zum Transformieren eines durch den Phasenstromdetektor erfassten Phasenstroms des Motors (5) in ein orthogonales biaxiales Koordinatensystem enthält;

die Koordinatenumwandlungseinheit (21) einen koordinatentransformierten Stromwert zu der Stromsteuereinheit (22) ausgibt; und

die Stromsteuereinheit (22) den Befehlswert für die Spannung auf der Grundlage des Befehlswerts für den koordinatentransformierten Strom und eines Ausgangssignals der Koordinatenumwandlungseinheit (21) ausgibt.

8. Motortreiber nach Anspruch 7, bei dem die Stromsteuereinheit (22) Befehlswerte für die zwei koordinatentransformieren Koordinatenachsen zum Ausgeben des Befehlswerts für die Spannung ausgibt; und

die Ausgangsspannungs-Begrenzungseinheit (23) die an den Motor (5) angelegte Spannung auf der Grundlage des Befehlswerts für die Spannung begrenzt.

9. Motortreiber nach einem der Ansprüche 1 bis 8, bei dem die Steuereinheit (10) einen Erfassungswert der Phase der Wechselstromquelle (1) oder einen Erfassungswert einer Drehphase des Motors (5) kompensiert, um einen Phasenwinkelbetrag entsprechend der Hälfte eines Abtastzyklus der Steuereinheit (10) vorzurücken.

10. Motortreiber nach einem der Ansprüche 7 bis 9, bei dem die Steuereinheit (10) eine Positionsschätzeinheit (27) enthält, die die Drehphase des Motors (5) auf der Grundlage des zu dem Motor (5) fließenden Stroms und der an den Motor (5) angelegten Spannung schätzt.

11. Motortreiber nach Anspruch 10, bei dem die Koordinatenumwandlungseinheit (21) eine Koordinatentransformation bei Aktivierung des Motors (5) auf der Grundlage des Phasenstroms des Motors (5) durchführt und weiterhin die Koordinatentransformation in einer durch die Positionsschätzeinheit (27) geschätzten Phase durchführt, nachdem die Drehgesehwindigkeit des Motors (5) einen vorbestimmten Wert erreicht hat.

12. Motortreiber nach Anspruch 11, bei dem die Koordinatenumwandlungseinheit (21) einen Differenzwert zwischen einer Phase nach der Koordinatentransformation der an den Motor (5) angelegten Spannung und einer Drehphase des Motors (5) berechnet und einen Drehkoordinatenwinkel vor dem Beginn der Koordinatentransformation unter Verwendung des Differenzwerts zum Starten der Koordinatentransformation in der durch die Positionsschätzeinheit (27) geschätzten Phase korrigiert.

13. Motortreiber nach Anspruch 12, bei dem:

in dem Fall, in welchem die Steuereinheit (10) oder die darin enthaltene Einheit eine Steuerberechnung durchführt, die eine Integralsteuerung enthält, wenn die Koordinatenumwandlungseinheit (21) die Koordinatentransformation in der von der Positionsschätzeinheit (27) geschätzten Phase beginnt, eine Berechnung zum Einstellen der Spannung oder des Stroms nach der Koordinatentransformation der an den Motor (5) angelegten Spannung durchgeführt wird mit einer Rotationsmatrix auf der Grundlage des Differenzwertes und eine Berechnungsvorrichtung zum Durchführen der Integralsteuerung initialisiert wird unter Verwendung der eingestellten Spannung oder des eingestellten Stroms.

14. Motortreiber nach Anspruch 13, bei dem, wenn die Berechnungsvorrichtung zum Durchführen der Integralsteuerung unter Verwendung des eingestellten Stroms initialisiert wird, unter den Befehlswerten für den Strom ein Inhalt entsprechend einer magnetischen Flussachse auf 0 gesetzt wird und ein Inhalt entsprechend einer Drehmomentachse auf einen skalaren Wert des Stroms vor der Initialisierung des Integrators gesetzt wird.

15. Motortreiber nach einem der Ansprüche 1 bis 14, bei dem die Steuereinheit (10) die Kompensation von Interferenzinhalten von Achsen des Motors (5) in ein Ausgangssignal der Stromsteuereinheit (22) steuert.

16. Motortreiber nach einem der Ansprüche 1 bis 15 zum Steuern des Motors (5), der einer folgenden Gleichung (1) genügt:

$$\Phi \leq 20 \times (Lq - Ld) \qquad \ldots (1)$$

$\Phi$: induzierte Spannungskonstante eines Motors
Ld: Induktivität der d-Achse
Lq: Induktivität der q-wachse

17. Motortreiber nach einem der Ansprüche 1 bis 16, bei dem ein Kondensator (4) zum Glätten der durch die Gleichrichtungseinheit (3) gleichgerichteten Spannung mit einer Ausgangsseite der Gleichrichtungseinheit (3) verbunden ist; und
eine Kapazität des Kondensators (4) auf einen Pegel verringert wird, um zu bewirken, dass eine Leistungsquetllen-Welligkeit stark bei einer Frequenz pulsiert, die das Doppelte der Frequenz der WechselStromquelle (1) ist.

18. Motortreiber nach Anspruch 17, bei dem eine Spule (2) zwischen dem Kondensator (4) und der Wechselstromquelle (1) angeordnet ist.

19. Motortreiber nach Anspruch 18, bei dem eine Resonanzfrequenz des Kondensators (4) und der Spule (2) 41-mal größer als die Frequenz der Wechselstromquelle (1) wird.

20. Motortreiber nach Anspruch 1, weiterhin aufweisend einen Phasenstromdetektor zum Erfassen eines zu dem Motor (5) fließenden Phasenstroms, wobei die Stromsteuereinheit (22) den Befehlswert für die an den Motor (5) angelegte Spannung auf der Grundlage des Befehlswerts für den Strom und eines Ausgangssignals des Phasenstromdetektors ausgibt.

21. Motortreiber nach Anspruch 3, weiterhin aufweisend einen Leistungsquellen-Phasendetektor (9) zum Erfassen einer Phase der Wechselstromquelle (1), wobei:

die Steuereinheit (10) eine Sinuswellenform erzeugt, die ähnlich der der Wechselspannung von der Wechselstromquelle (1) ist, auf der Grundlage der von dem Leistungsquellen-Phasendetektor (9) erfassten Phase der Wechselstromquelle (1); und

der Befehlswert für den Strom mit der Sinuswellenform multipliziert wird, um zu der Stromsteuereinheit (22) ausgegeben zu werden.

**22.** Kompressorantrieb, welcher aufweist:

den Motortreiber nach einem der Ansprüche 1 bis 21; und
einen durch den Motortreiber angetriebenen Motor, wobei ein Kompressor durch den Motor angetrieben wird.

**Revendications**

**1.** Dispositif d'entraînement de moteur comprenant une unité de redressement (3) pour redresser une tension alternative d'une source alternative (1) en une tension continue ;
une unité de conversion de puissance (6) pour convertir la tension continue délivrée par l'unité de redressement (3) en la tension alternative de manière à ce qu'elle soit appliquée à un moteur (5) ; et
une unité de commande (10) pour commander la tension appliquée au moteur (5) à partir de l'unité de conversion de puissance (6), dans lequel :

l'unité de commande (10) comprend une unité de limitation de tension de sortie (23) qui exécute une commande de sorte qu'une valeur scalaire de la tension appliquée au moteur (5) devienne inférieure ou égale à une tension de sortie maximum définie par la tension continue délivrée par l'unité de redressement (3) ;
une quantité d'une tension limitée par l'unité de limitation de tension de sortie (23) est renvoyée à l'unité de commande (10) ;
l'unité de commande (10) comprend une unité de commande de courant (22) qui reçoit une valeur de commande d'un courant appliqué au moteur (5), et qui délivre une valeur de commande d'une tension appliquée au moteur (5) sur la base de la valeur de commande du courant : et
l'unité de limitation de tension de sortie (23) reçoit la valeur de commande de la tension à partir de l'unité de commande de courant (22), calcule la valeur scalaire de la valeur de commande de la tension, et limite la tension appliquée au moteur (5) lorsque la valeur scalaire dépasse la tension de sortie maximum définie par la tension continue délivrée par l'unité de redressement (3) ;
**caractérisé en ce que** l'unité de commande de courant (22) comprend un intégrateur, et calcule la valeur de commande de la tension en permettant à l'intégrateur d'effectuer un calcul de commande comprenant une commande intégrale de manière à ce qu'elle soit délivrée :

l'unité de limitation de tension de sortie (23) renvoie la quantité de limitation de tension à l'unité de commande de courant (22) ; et
l'unité de commande de courant (22) soustrais la quantité de limitation de tension renvoyée par l'unité de limitation de tension de sortie (23) d'une valeur de sortie de l'intégrateur.

**2.** Dispositif d'entraînement de moteur selon la revendication 1, dans lequel :

l'unité de limitation de tension de sortie (23) effectue la limitation uniquement lorsque la valeur scalaire de la valeur de commande de la tension dépasse la tension de sortie maximum définie par la tension continue délivrée par l'unité de redressement (3), et renvoie la quantité de limitation de tension à l'unité de commande de courant (22) ; et
l'unité de commande de courant (22) effectue la soustraction uniquement lors de la réception du retour de la quantité de limitation de tension depuis l'unité de limitation de tension de sortie (23).

**3.** Dispositif d'entraînement de moteur selon l'une quelconque des revendications 1 et 2, dans lequel l'unité de commande de courant (22) délivre la valeur de commande de la tension de sorte qu'une forme d'onde du courant circulant vers le moteur (5) devienne similaire à celle de la tension alternative provenant de la source alternative (1).

**4.** Dispositif d'entraînement de moteur comprenant une unité de redressement (3) pour redresser une tension alternative provenant d'une source alternative (1) en une tension continue ;
une unité de conversion de puissance (6) pour convertir la tension continue délivrée par l'unité de redressement (3) en la tension alternative de manière à ce qu'elle soit appliquée à un moteur (5) ; et

une unité de commande (10) pour commander la tension appliquée au moteur (5) à partir de l'unité de conversion de puissance (6), dans lequel :

l'unité de commande (10) comprend une unité de limitation de tension de sortie (23) qui exécute une commande de sorte qu'une valeur scalaire de la tension appliquée au moteur (5) devienne inférieure ou égale à une tension de sortie maximum définie par la tension continue délivrée par l'unité de redressement (3) ;

une quantité d'une tension limitée par l'unité de limitation de tension de sortie (23) est renvoyée à l'unité de commande (10) ;

l'unité de commande (10) calcule la valeur de commande du courant de manière à maintenir une quantité de flux magnétique totale du moteur (5) constante ;

l'unité de commande (10) comprend une unité de génération de commande de courant (26) qui reçoit une valeur de commande d'un flux magnétique du moteur (5) pour calculer la valeur de commande du courant de manière à maintenir la quantité de flux magnétique totale du moteur (5) constante ; et

l'unité de génération de commande de courant (26) calcule une quantité de chute de tension provoquée par une résistance de phase sur la base de la résistance de phase et du courant de phase du moteur (5), et calcule la quantité de flux magnétique totale sur la base d'une différence entre la tension appliquée au moteur (5) et la quantité de chute de tension ;

**caractérisé en ce qu'**un décalage prédéterminé est pourvu pour une phase correspondant à un point de passage par zéro de la source alternative (1) lorsque l'unité de génération de commande de courant (26) calcule la valeur de commande du courant, et

l'unité de génération de commande de courant (26) diminue une amplitude de la valeur de commande du courant d'un taux prédéterminé de manière à ce qu'elle soit décalée d'une valeur prédéterminée pour calculer la valeur de commande du courant, et effectue un calcul pour corriger la valeur de commande du courant de manière à ce qu'elle devienne identique à la valeur de commande avant le décalage dans une phase correspondant à un point maximum de la source alternative (1).

5. Dispositif d'entraînement de moteur selon la revendication 4, dans lequel la valeur de commande du flux magnétique du moteur (5) est diminuée alors que la vitesse de rotation du moteur (5) devient élevée.

6. Dispositif d'entraînement de moteur selon la revendication 5, dans lequel une valeur limite inférieure prédéterminée est définie pour la valeur de commande du flux magnétique du moteur (5).

7. Dispositif d'entraînement de moteur selon l'une quelconque des revendications 1 à 6, dans lequel :

l'unité de commande (10) comprend une unité de conversion de coordonnées (21) pour transformer un courant de phase du moteur (5) détecté par le détecteur de courant de phase dans un système de coordonnées biaxiales orthogonales ;

l'unité de conversion de coordonnées (21) délivre une valeur de courant à coordonnées transformées à l'unité de commande de courant (22) ; et

l'unité de commande de courant (22) délivre la valeur de commande de la tension sur la base de la valeur de commande du courant à coordonnées transformées et d'une sortie de l'unité de conversion de coordonnées (21).

8. Dispositif d'entraînement de moteur selon la revendication 7, dans lequel l'unité de commande de courant (22) délivre des valeurs de commande des deux axes de coordonnées à coordonnées transformées pour délivrer la valeur de commande de la tension ; et

l'unité de limitation de tension de sortie (23) limite la tension appliquée au moteur (5) sur la base de la valeur de commande de la tension.

9. Dispositif d'entraînement de moteur selon l'une quelconque des revendications 1 à 8, dans lequel l'unité de commande (10) compense une valeur de détection de la phase de la source alternative (1) ou une valeur de détection d'une phase de rotation du moteur (5) pour avancer d'une quantité angulaire de phase correspondant à la moitié d'un cycle d'échantillonnage de l'unité de commande (10).

10. Dispositif d'entraînement de moteur selon l'une quelconque des revendications 7 à 9, dans lequel l'unité de commande (10) comprend une unité d'estimation de position (27) qui estime la phase de rotation du moteur (5) sur la base du courant circulant vers le moteur (5) et de la tension appliquée au moteur (5).

11. Dispositif d'entraînement de moteur selon la revendication 10, dans lequel l'unité de conversion de coordonnées (21) effectue une transformation de coordonnées lors de l'activation du moteur (5) sur la base du courant de phase du moteur (5), et effectue en outre la transformation de coordonnées dans une phase estimée par l'unité d'estimation de position (27) après qu'une vitesse de rotation du moteur (5) a atteint une valeur prédéterminée.

**12.** Dispositif d'entraînement de moteur selon la revendication 11, dans lequel l'unité de conversion de coordonnées (21) calcule une valeur de différence entre une phase après une transformation de coordonnées de la tension appliquée au moteur (5) et une phase de rotation du moteur (5), et corrige un angle de coordonnées de rotation avant de débuter la transformation de coordonnées en utilisant la valeur de différence pour débuter la transformation de coordonnées dans la phase estimée par l'unité d'estimation de position (27).

**13.** Dispositif d'entraînement de moteur selon la revendication 12, dans lequel :

dans le cas où l'unité de commande (10) ou l'unité incluse dans celle-ci effectue un calcul de commande qui comprend une commande intégrale, lorsque l'unité de conversion de coordonnées (21) débute la transformation de coordonnées dans la phase estimée par l'unité d'estimation de position (27), un calcul pour ajuster la tension ou le courant après une transformation de coordonnées de la tension appliquée au moteur (5) est effectué par une matrice de rotation basée sur la valeur de différence, et un calculateur pour appliquer la commande intégrale est initialisé en utilisant la tension ajustée ou le courant ajusté.

**14.** Dispositif d'entraînement de moteur selon la revendication 13, dans lequel lorsque le calculateur pour effectuer la commande intégrale est initialisé en utilisant le courant ajusté, parmi les valeurs de commande du courant, un contenu correspondant à un axe de flux magnétique est mis à 0, et un contenu correspondant à un axe de couple est mis à une valeur scalaire du courant avant l'initialisation de l'intégrateur.

**15.** Dispositif d'entraînement de moteur selon l'une quelconque des revendications 1 à 14, dans lequel l'unité de commande (10) effectue une commande pour compenser les contenus d'interférence des axes du moteur (5) dans une sortie de l'unité de commande de courant (22).

**16.** Dispositif d'entraînement de moteur selon l'une quelconque des revendications 1 à 15, pour commander le moteur (5) qui satisfait à une équation (1) suivante :

$$\Phi \leq 20 \times (Lq - Ld) \qquad ... \quad (1)$$

$\Phi$: constante de tension induite d'un moteur
Ld : inductance d'axe d
Lq : inductance d'axe q

**17.** Dispositif d'entraînement de moteur selon l'une quelconque des revendications 1 à 16, dans lequel un condensateur (4) pour lisser la tension redressée par l'unité de redressement (3) est connecté à un côté de sortie de l'unité de redressement (3) ; et
une capacitance du condensateur (4) est réduite à un niveau pour provoquer une ondulation de la source de puissance qui oscille principalement à une fréquence double de la fréquence de la source alternative (1).

**18.** Dispositif d'entraînement de moteur selon la revendication 17, dans lequel une bobine (2) est disposée entre le condensateur (4) et la source alternative (1).

**19.** Dispositif d'entraînement de moteur selon la revendication 18, dans lequel une fréquence de résonance du condensateur (4) et de la bobine (2) devient 41 fois supérieure à la fréquence de la source alternative (1).

**20.** Dispositif d'entraînement de moteur selon la revendication 1, comprenant en outre un détecteur de courant de phase pour détecter un courant de phase circulant vers le moteur (5), dans lequel l'unité de commande de courant (22) délivre la valeur de commande de la tension appliquée au moteur (5) sur la base de la valeur de commande du courant et d'une sortie du détecteur de courant de phase.

**21.** Dispositif d'entraînement de moteur selon la revendication 3, comprenant en outre un détecteur de phase de source de puissance (9) pour détecter une phase de la source alternative (1), dans lequel :

l'unité de commande (10) génère une forme d'onde sinusoïdale qui est similaire à celle de la tension alternative de la source alternative (1) sur la base de la phase de la source alternative (1) détectée par le détecteur de phase de source de puissance (9) ; et

la valeur de commande du courant est multipliée par la forme d'onde sinusoïdale de manière à être délivrée à l'unité de commande de courant (22).

22. Entraînement de compresseur comprenant :

le dispositif d'entraînement de moteur selon l'une quelconque des revendications 1 à 21 ; et
un moteur entraîné par le dispositif d'entraînement de moteur, dans lequel un compresseur est entraîné par le moteur.

FIG. 1

FIG. 2

F I G. 3

F I G. 4

FIG. 5

(a)

$I_\gamma^*$ →(+) →[$K_{id}$]→ →(+)→ $V_{\gamma 0}$

$I_\gamma$ (−)

[$1/T_{id}$]→[$\dfrac{1}{s}$]→(+)

← $V_\gamma\_rst$

24a

(b)

$I_\delta^*$ →(+) →[$K_{iq}$]→ →(+)→ $V_{\delta 0}$

$I_\delta$ (−)

[$1/T_{iq}$]→[$\dfrac{1}{s}$]→(+)

← $V_\delta\_rst$

24b

FIG. 6

FIG. 7

SPEED COMMAND    MAGNETIC FLUX
                COMMAND

FIG. 8

(a)

MAGNETIC FLUX COMMAND → PI CONTROL → × → I,*

POWER SOURCE PHASE → (×)

TOTAL MAGNETIC FLUX CALCULATION VALUE → FILTER → (PI CONTROL)

(b)

POWER SOURCE PHASE → (×)

MAGNETIC FLUX COMMAND → × → PI CONTROL → I,*

TOTAL MAGNETIC FLUX CALCULATION VALUE → (PI CONTROL)

FIG. 9

(a) DC VOLTAGE [V] vs TIME t

(b) TOTAL MAGNETIC FLUX [wb] vs TIME t

EP 2 034 605 B1

FIG. 10

MAGNETIC FLUX COMMAND

0                    ROTATING SPEED

FIG. 11

PERIOD FOR CHARGING
SMOOTHING CAPACITOR

DC VOLTAGE [V]

INPUT CURREN [A]

TIME t

33

F I G. 1 2

F I G. 1 3

(a)

(b)

FIG. 14

SPEED COMMAND    MAGNETIC FLUX 10
                 COMMAND

FIG. 15

FIG. 16

$\gamma_o - \delta_o$ : OPEN LOOP CONTROL AXIS

$\gamma_n - \delta_n$ : OPEN LOOP CONTROL AXIS

$\Delta\theta$ : DIFFERENTIAL ANGLE

F I G. 1 7

F I G. 1 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004064958 A
- JP 2006303963 A
- US 5734251 A
- JP 10150795 A
- JP 2002051589 A
- JP 6153534 A

- JP 2005020986 A
- JP 2002223599 A
- JP 2003164179 A
- JP 2005130666 A
- JP 2005039902 A

**Non-patent literature cited in the description**

- **Watanabe et al.** Method for sensor-less detection of a rotor position and speed of permanent magnet field motor. *Journal of IEEJ, D,* 1990, vol. 110 (11), 1193-1200

- **Takeshita et al.** Sensor-less salient-pole type brushless DC motor control based on speed electromotive force. *Journal of IEEJ, D,* 1997, vol. 117 (1), 98-104